# EUROPEAN PATENT SPECIFICATION

(11) **EP 4 426 776 B1**
(45) Date of publication and mention of the grant of the patent: **01.10.2025**
(21) Application number: 22813165.2
(22) Date of filing: 28.10.2022
(51) Int. Cl.: C08J 11/14, C08J 11/22, C08J 11/28

(54) **NEW METHOD FOR RECYCLING OF POLYURETHANE**
NEUES VERFAHREN ZUM RECYCELN VON POLYURETHAN
NOUVEAU PROCÉDÉ DE RECYCLAGE DE POLYURÉTHANE

(30) Priority: 03.11.2021 EP 21206262
(43) Date of publication of application: 11.09.2024
(73) Proprietor: Evonik Operations GmbH, 45128 Essen (DE)
(72) Inventor: BORCHERS, Georg, 61231 Bad Nauheim (DE); MÜLLER, Hubert, 65929 Frankfurt am Main (DE); RÖDER, Jörg, 36381 Schlüchtern (DE); HINRICHS-TONTRUP, Natalia, 63755 Alzenau (DE); MESS, Brigitte, 64839 Münster (DE); FISCHER, Malte, 63452 Hanau (DE); LAZAR, Marina, 63594 Hasselroth (DE); BLESGEN, Andree, 60323 Frankfurt (DE); HILDEBRAND, Jens, 63867 Johannesberg (DE)
(74) Representative: Evonik Patent Association
(86) International application number: PCT/EP2022/080259
(87) International publication number: WO 2023/078802

(56) References cited:
- JP-A- 2000 247 917
- US-A- 5 208 379
- US-A1- 2016 347 927
- US-A1- 2021 017 354

## Description

The present invention provides a new method for recycling of polyurethane, in particular polyurethane foam, via solvolysis. The new method includes a very efficient pre-treatment method of the polyurethane, wherein it is converted into a polyurethane dispersion.

Polyurethanes are materials of considerable utility in the production of rigid and flexible foams, solid and microcellular elastomers, sealants, coatings, and adhesives. The versatility, relatively low cost, and superior properties of polyurethanes have resulted in the rapid growth of the polyurethane industry over the past 50 years. Currently, many thousand tons of polyurethanes are produced each year throughout the world. Unfortunately, most polyurethanes are thermoset materials which are cross-linked to one degree or another. Unlike thermoplastics such as polyethylene, polypropylene, and polystyrene, scrap or waste polyurethanes thus cannot be readily remelted or reprocessed into useful articles. Since it would be highly desirable for economic and environmental reasons to reuse or recover the large volume of scrap or waste polyurethane generated each year rather than burning it or disposing of it in landfills, considerable inventive effort has been devoted to devising processes for recovering useful chemical components from scrap polyurethane materials.

Glycolysis is used for recycling, i.e. depolymerization, of PUs (polyurethanes) waste including both rigid and flexible type products.

Scraps of polyurethane foam may also be recycled via ammonolysis and aminolysis by using ammonia, amines, or alkanolamines to retrieve monomeric polyols, which can be reused for the synthesis of PU. DE 102006036007 A1 for example describes a process wherein polyurethanes and polyureas are recycled via aminolysis.

Acidolysis has also been suggested to recycle polyurethane to polyols. CN 107286369 A describes an acidolysis of soft polyurethane foam waste to produce polyol. The method comprises the steps i) producing fragments of the polyurethane and ii) feeding the fragments to a reactor by screw feeding or vacuum suction. The foam fragments of CN 107286369 A have a particle size of 1 to 20 mm and are produced by crushing. The process of CN 107286369 A requires very high reaction temperature of 230 to 250 °C and long reaction times of 6 to 12 hours.

US 2021/0017354 A1 discloses a process for PU recycling starting with an acidolysis followed by a glycolysis. Shredded PU having a size of 2x2x2cm was added to an acidolysis mixture comprising polyethertriol, phthalic acid, maleic acid, acrylic acid and a radical starter until a reaction mixture comprising 40 % by weight PU was obtained. The process of US'354 is inefficient because of the number of process steps and reactants needed. The high PU content causes that the wetted PU cannot be pumped like liquids or dispersions (see Comparative Example 2 below) as well as that mixture comprises a low amount of heat transfer medium. As consequence long reaction times, e.g. more than 3 hours in the examples of US'354, are needed. Another consequence was incomplete conversion of the PU leading to insufficient productivity of the process.

US 2016/0347927 A1 describes a chemolysis reaction to recycle PU. In a first step rigid PU is wet-grinded to obtain a wetted PU powder. Said PU powder is afterwards subjected to chemolysis reactions. Analogue to US'354 in the process of US'927 the wetted PU powder cannot be pumped. It must be conveyed with a screw conveyor or other particle conveying devices. Thus, dosing of the powder into the chemolysis reactor is difficult and cannot be done precisely. As in US'354 the low amount of heat transfer medium causes insufficient reaction times and yields.

Hydrolysis was also tested for depolymerization of polyurethanes in the prior art. Prior art methods using base catalysis to recover polyether polyols, however, suffers from several disadvantages. At relatively low temperatures, the hydrolysis rate is slow, respectively the hydrolysis was reported to be incomplete. At higher temperatures, the rate is faster but certain undesired side reactions may occur. US 5,208,379 for example suggests a method to hydrolyze a polyurethane produced by reacting an active hydrogen-containing polyether and an organic polyisocyanate, which comprises contacting said polyurethane with water in the presence of an effective amount of a strong base selected from the group consisting of alkali metal oxides, alkali metal hydroxides, alkaline earth metal oxides, and alkaline earth metal hydroxides and an effective amount of an activating agent selected from the group consisting of quaternary ammonium salts containing at least 15 carbon atoms and organic sulfonates containing at least 7 carbon atoms for a time and at a temperature effective to yield the active hydrogen-containing polyether and an organic polyamine. Even though US 5,208,379 discloses in the general description that the reaction temperature may be chosen in a range of from 80 to 225 °C, example 19 shows that at 120 °C only partial hydrolysis took place and example 18 shows that at 140°C yields were only 70%.

None of these processes has been used in large industrial scale, yet. They are too complex and expensive because of high reaction temperatures and long reaction times. The quality of the recycling polyols respectively amines is bad, so that only small amounts of recycling material can be used together with large amounts of virgin polyol to produce new polyurethane foams.

Beside of the solvolysis itself, problems have been reported in the prior art relating to feeding of the polyurethane waste into the solvolysis reactor.

CN 109320764 A discloses a polyurethane foam alcoholysis recovery method and a special recovery feeding device. CN 109320764 A addresses the problem that polyurethane foam has a low bulk density and crushed polyurethane foam aggregates are difficult to be conveyed into a reactor by common screw machines. This is because the alcohol used in the alcoholysis volatilizes and gets into contact with the polyurethane in the screw. The polyurethane, thus, becomes sticky and adheres to the feeding pipeline. As solution CN 109320764 A suggests a feeding system wherein polyurethane foam aggregates were extruded from a feeding hopper into a screw conveyor to be conveyed to a double-spiral feeding conveyor. Finally, the polyurethane is fed to a reactor via a pneumatic gate valve. The feeding system provided in CN 109320764 A is very complex and the process still requires several hours reaction times.

DE 4309288 A1 relates to a process for production of granules and pellets from crosslinked polyurethane plastics. Analogue to CN 109320764, problems caused by the low bulk density of polyurethane foams, which results in blockage of the feeding system of thermoplastic processing machines and very low throughputs, are tried to be solved. As solution DE 4309288 A1 proposes a process wherein polyurethane foam is cut on a cutting mill to particles having a size of about 6 mm. These are then pressed through a flat matrix to obtain strands at a temperature of 160 ° C. The strands can be further processed to pellets or granules. These pellets or granules can be used as starting material for PU recycling methods like glycolysis, aminolysis or hydrolysis. The process from DE 4309288 A1 is complex, too.

Thus, there is still a need for more efficient recycling methods for polyurethane, in particular polyurethane waste and scraps.

Object of the present invention was to provide a process for recycling of polyurethane, not having the disadvantages of the prior art processes or having such disadvantages only to a reduced degree.

A specific objective of the invention was to provide an effective polyurethane recycling method including efficient feeding of polyurethane into a solvolysis reactor.

A further specific problem to be solved by the present invention was to provide a method for polyurethane recycling allowing precise dosing of polyurethane into reactors, in particular reactors operating under elevated or high-pressure conditions.

A next specific problem to be solved by the present invention was to provide a method for polyurethane recycling being beneficial compared to prior art processes in view of reaction time and/or reaction temperature and/or polyol yield.

Another specific problem to be solved by the present invention was to provide a method for polyurethane recycling allowing to charge a reactor with a high load of polyurethane.

Still another problem to be solved by the present invention was to provide a method allowing to produce polyol from polyurethane, wherein the polyol has very good quality and can be used in large amounts to produce new polyurethane.

Further problems not explicitly mentioned before can be derived from the overall content of the subsequent description, examples, claims and figures.

The inventors surprisingly found out, that the problems of the present invention can be solved by a process comprising the steps
a. Providing a polyurethane, preferably a polyurethane foam,
b. Preparing a dispersion from the polyurethane,
c. Solvolysis of the polyurethane dispersion, preferably carried out as alcoholysis, aminolysis, amonolysis, hydrolysis or acidolysis,
characterized in that the polyurethane to be dispersed has an average particle size of 0.1 to 12 mm, and the polyurethane content in the dispersion after step b. and/or the dispersion used for step c. is in a range of from 4 to 20 percent by weight.

Applicants found out that if polyurethane foam is pulverized to obtain a dry powder and the dry powder is fed into a solvolysis reactor, the polyurethane powder, because of its very low density, floats on the surface of the reaction liquid and accumulates in the gas room of the reactor. It is, thus, very difficult to achieve wetting of the powder and mixing it with the reaction solution. This leads to delays in feeding, unprecise and difficult to control dosing and long reaction times.

To increase the density of the powder it was suggested in the prior art to conduct thermal compacting of polyurethane waste before grinding. Such method was applied in US 5208379, however, this method requires solvolysis rection times of 8 hours for the compacted and thereafter grinded material. Even though US 5208379 mentions in the description reaction times of 5 min to 12 hours, Examples 20 to 22 show that reducing the reaction time from 8 hours to 2 hours leads to a decrease in polyol yield from 95% to 70%. Thus, the process of US 5208379 is not commercially applicable with short reaction times.

Inventors of the present invention now found out that the thermal compacting reduces the external surface of the polyurethane powder, which causes the significantly longer reaction times and high reaction temperatures.

In contrast thereto, with the process of the present invention very high yield were achieved at reaction times of polyurethane foam hydrolysis of only 30 minutes. Without being bond to any theory, this significant improvement was achieved because in the process of the invention the pores of the polyurethane are opened and the external surface of the resulting powder is increased rather than decreased as takes place during hot compacting as disclosed in US 5208379.

The high surface polyurethane powder of the invention is converted to a dispersion before being subjected to solvolysis. Preparing the dispersion can be done under mild conditions, for example at ambient pressure and temperature, thus, it does not have any respectively it does have only very low negative impact on the external surface of the polyurethane powder. The resulting polyurethane dispersion of the invention can be dosed precisely into a reactor and avoids the above discussed problems with dry polyurethane powders, which floated on the reaction solution. Beside of the precise dosing, a very efficient and fast mixing of the polyurethane dispersion with the reaction mixture is possible. In sum, the process of the invention therefore leads to short reaction time, high yields of polyol and allows very efficient and precise feeding of polyurethane into a reactor.

Another benefit of the process of the invention is, that the polyurethane dispersion obtained in step b can be pumped easily through pipes into a reactor. Thus, pipes and fillings with rather small cross-sections can be used. This is relevant for reactors working under elevated or high-pressure and enables efficient feeding and dosing of the dispersion of the invention into such reactors. If a reactor is operated under elevated pressure and a larger pressure level is to be overcome in the dosing of the polyurethane, the necessary fittings, such as tightly closing flaps must have large dimensions be designed such that the dosing of the polyurethane is possible without flow problems. In contrast to the present invention, direct feeding of dry polyurethane powder to such reactor, due to its low density and poor flowability, requires much larger outlet cross-sections, which in turn results in very large dimensions of the fittings and high costs.

The polyurethane dispersion obtained in step b. can be pumped easily through pipes. As consequence pipe reactors can be used for the solvolysis reaction. allowing a continuous operation of the process. Beside of the continuous operation pipe reactors are beneficial in view of heat management, i.e. heat transfer to and from the reaction mixture.

The process of the invention allows high polyurethane loads in the reactors, which cannot be achieved with prior art technologies, because of the low bulk density of grinded polyurethane foam and the floating problems described before.

The method of the invention is very flexible. Meaning the inventive polyurethane dispersion obtained in step b. can be used as feed for different solvolysis methods, preferably for aminolysis, amonolysis, hydrolysis, acidolysis or for alcoholysis methods like glycolysis, hydroglycolysis and methanolysis. Hydrolysis is most preferably carried out in step c.

Another benefit of the process of the invention is that the recycled polyols are of excellent quality. They can replace large quantities of virgin polyols during production of new polyurethane foam, preferably flexible PU foam, without negative impact on the quality of polyurethane foams. Polyurethane foams with high quality could by obtained, with up to 100% of the inventive recycling polyols. The recycling polyols obtained according to the present invention can further be used to produce flexible PU foams, which could not be obtained from recycled polyol, yet, because prior art recycling polyols had negative impact on physical and mechanical properties of the resulting polyurethane foams.

Because of the disadvantages of prior art polyurethane recycling methods broad commercial implementation could not be achieved, yet. The present invention overcame said disadvantages and thus provides a positive environmental and sustainability impact such as beneficial life cycle analysis, or improvements in circularity of the PU foam production process.

Further benefits can be derived from the subsequent description, examples and figures and claims.

Before describing the invention in more details, some important terms are defined as follows:
The verb "to comprise" as is used in the description, examples and the claims and its conjugation is used in its non-limiting sense to mean that items following the word are included, but items not specifically mentioned are not excluded. "Comprising" includes "consisting of" meaning that items following the word "comprising", are included without any additional, not specifically mentioned items, as preferred embodiment.

Reference to an element be the indefinite article "a" or "an" does not exclude the possibility that more than one of the elements is present, unless the context clearly requires that there is one and only one of the elements. The indefinite article "a" or "an" thus usually means "one or more".

The terms "catalyst" and "activating agent" are used synonymously in the present invention.

Polyurethane (PU) in the context of the present invention is especially understood to mean a product obtainable by reaction of polyisocyanates and polyols, or compounds having isocyanate-reactive groups. The polyurethanes which may be subjected to the process of the present invention are those prepared from active hydrogen-containing polyethers and polyisocyanates. Polyurethanes of this type are well known and are described, for example, in Ulrich, "Urethane Polymers", in Encyclopedia of Chemical Technology, Vol. 23, pp. 576-608(1983) and Backus et al., "Polyurethanes", in Encyclopedia of Polymer Science and Technology, Vol. 13, pp. 243-303(1988). Any known polyurethane can be used in the process of the invention, preferably the polyurethane is polyurethane waste.

The active hydrogen-containing polyether preferably is a polyether polyol (i.e., a polyether having primary and/or secondary end groups, preferably hydroxyl groups) but may also be an amine-functionalized polyether (e.g., the "Jeffamine" polyoxypropylamines sold by Texaco Chemical Co.). Such materials are generally made by the catalytic ring-opening polymerization of one or more cyclic ethers such as epoxides, oxetanes, or oxolanes. Initiators having two or more active hydrogens such as polyhydric alcohols, amines, or acids may be employed to vary the functionality (number of active hydrogens) of the polyether. If more than one type of cyclic ether is used, they may be reacted either simultaneously (to yield a random-type copolymer) or sequentially (to yield a block-type copolymer). Illustrative cyclic ethers include propylene oxide, ethylene oxide, butylene oxide, tetrahydrofuran, and oxetane. Examples of suitable active hydrogen-containing polyethers include polypropylene glycol, polyethylene glycol, polytetramethylene glycol, polytrimethylene glycol, ethylene oxide-capped polypropylene glycol, random copolymers of ethylene oxide and propylene oxide.

The invention provides a solvolysis method for polyurethane, preferably a polyurethan produced by reacting an active hydrogen containing polyether and an organic polyisocyanate, comprising the steps:
a. Providing the polyurethane, preferably a polyurethane foam,
b. Preparing a dispersion from the polyurethane,
c. Solvolysis of the polyurethane dispersion from step b.

The method is characterized in that the polyurethane to be dispersed has an average particle size of 0.1 to 12 mm, and the polyurethane content in the dispersion after step b. and/or the dispersion used for step c. is in a range of from 4 to 20 percent by weight.

The polyurethane provided in step a. of the process of the invention may be derived from any polyisocyanate reactant (i.e., an organic compound containing two or more isocyanate groups). Suitable polyisocyanates include, but are not limited to, aliphatic diisocyanates, cycloaliphatic diisocyanates, aryl alkyl diisocyanates, aromatic diisocyanates (e.g., toluene diisocyanates and diisocyanatodiphenyl methanes), aromatic triisocyanates, as well as isocyanate mixtures such as the isocyanates commonly referred to as "PMDI". Modified, masked, or blocked polyisocyanates may, of course, also be utilized.

The polyurethane used is the process of the present invention may also include any of the conventional additional reactants or additives known in the art such as for example chain extenders or curatives (relatively low molecular weight active hydrogen-containing compounds such as glycols and di- or polyamines), physical or chemical blowing agents, flame retardants, surfactants, fillers, stabilizers, anti-oxidants, colorants, polymers other than the polyurethane polymer (e.g., styreneacrylonitrile copolymers such as are found in polymer polyols), catalysts, for example catalysts promoting the gelling reaction (isocyanate-polyol), the blowing reaction (isocyanate-water) and/or the dimerization or trimerization of the isocyanate. The polyurethane may be in solid, microcellular, or foam form and may range from a rubbery, elastomeric, flexible material to a hard, rigid substance.

Preferably the polyurethane provided in step a. is not subjected to a compression at ambient temperatures or above ambient temperatures before being used in step b. Other pre-treatments of the polyurethane provided in step a., which do not or only marginally impact its pore structure, like heat-treatment of a PU foam for sterilization, may preferably be carried out.

In a particular preferred embodiment of the invention a polyurethane foam is provided in step a.

In step b. of the process of the invention a dispersion from the polyurethane is prepared. In a preferred embodiment of the invention, step b. comprises the steps
b1. Chopping, pulverizing, grinding, milling, cutting, or otherwise comminuting the polyurethane provided in step a., to obtain a polyurethane powder
b2. Producing a dispersion from the polyurethane powder obtained in step b1.

The process of the invention, in particular if step b. is carried out as "two-step process" with steps b1. and b2., opens up the foam structure and destroys the cell walls of the polyurethane foam. As consequence, the penetration of solvolysis and/or dispersing liquid (dispersing medium) is greatly facilitated and intensive wetting of the polyurethane powder is achieved. Thus, it is preferred that step b. is carried out as two-step process.

In step b1. preferably a cutting mill or other suitable comminution device, preferably selected from the group consisting of roller mill, crusher, shredder and extruder, is used. Preferred examples for comminuting devices using extruders can be found in US5769335 and JP19940185764. By use of a cutting mill particular good results with regard to the fully opening up of the foam structure and destroying the cell walls were achieved (as can be seen in Figure-1b).

In case the polyurethane raw material already has a particle size small enough to prepare a dispersion, step b1. needs not be carried out. In this case step b. is preferably reduced to a "one-step process" with step b2. being the step b.. In most cases and in order to open the pore structures, it is, however, preferred to carry out step b1., too.

If step b1. is carried out it might be necessary to do a pre-shredding or coarse cutting of the polyurethane raw material in step a. to obtain fragments. The fragments can then be used in step b1. Whether pre-shredding is necessary depends on the design of the comminuting device, in particular if cutting mills are used, and the feed material. Pre-shredding or coarse cutting can be done manually or with coarse shredders.

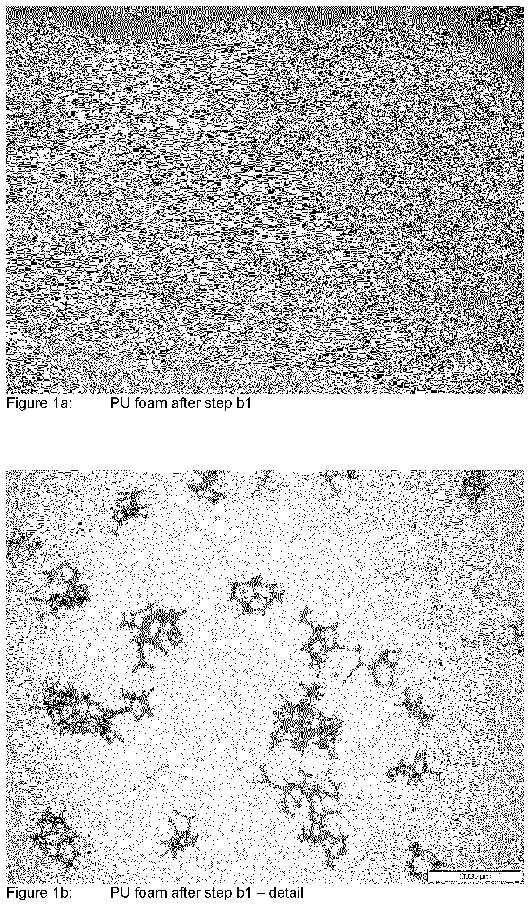

As mentioned before, it is particular preferred to use a cutting mill in step b1. Different types of cutting mills, especially with regard to the arrangement of the cutting knives and the sieve inserts, which are preferably used to adjust the size of the obtained polyurethane powder, can be used. Preferred examples for cutting knives are straight cut, diagonal cut or cross-cut knifes. Sieve layers with round, square or longitudinal perforations can be used, with preferred hole sizes of 0.5 - 20 mm. Manufacturers of suitable cutting mills are for example Hosokawa-Alpine, Netzsch-Condux, Pallmann or Herbold-Meckesheim. By use of such cutting mills a "snow like" fluffy polyurethane powder is obtained, wherein the polyurethane has the appearance of dry fluffy snow as shown in Figure 1a.

To obtain a particular stable polyurethane dispersion in view of segregation and/or wetting of the particles, it is preferred that the polyurethane powder to be dispersed, i.e. dispersed in step b2. in above described two-step process or step b. in above described one-step process, have an average particle size of preferably 0.2 to 4 mm more preferred 0.5 to 2 mm. Dispersions obtained from such polyurethane particles have shown to be storage stable over a long period of time. Even if, after the long period of time, segregation takes place, in particular in dispersion made from the polyurethane particles obtained after step b1., i.e. those with the fully open structure, the particles were found to be still very well wetted.

It is further preferred to adjust the bulk density of the polyurethane powder subjected to the dispersing step, i.e. step b2. in above described two-step process or step b. in above described one-step process, to be higher than that of the polyurethane raw material having a bulk density of 20-26 kg/m³. Preferably the bulk density of the polyurethane powder is higher than 30 kg/m³, more preferably higher than 60 kg/m³ and even more preferably in a range of from 90 kg/m³ and 200 kg/m³. Increasing the bulk density allows a higher load of polyurethane in the solvolysis reactor. One preferred method for adjusting the bulk density is using a mill, more preferably a cutter mill and selecting the sieve size appropriately. Depending on the selected sieve size, not only the resulting particle size may be adjusted, but also the bulk density of the polyurethane snow.

If step b1. is carried out, it is particular preferred that step b1 is carried out in a temperature range between ambient temperature and 120 °C, preferably between ambient temperature and 100 °C, more preferred between ambient temperature and 80 °C and most preferred between ambient temperature and 60 °C to prevent product clumping and blockage of device used to produce the polyurethane powder in step b1.

The pressure applied in step b1. is depending on the selected device and may be higher for an extruder. Most of the other devices are operated and ambient pressure or with a slight vacuum, depending on the equipment, to support powder transport-

The dispersing step b2. (b. two-step process) of b. (b. one-step process) is preferably carried out in fast-running dispersing devices. Preferably devices selected from the group consisting of colloid mills, more preferred cone mills, and single- or multi-stage rotor-stator systems with different geometries are used. In a stirred vessel a dispersion may also be obtained by use of a fast running dissolver disk or sawtooth impeller. The dispersing devices used are preferably equipped with tools specially developed for the entry of solids into liquids, for example designed with a (vertical) feed screw for a mechanical feed or the generation of a vacuum to suck in the powder. The dispersing devices can be operated either in single-pass, pump-recycling, or multi-passage operating mode. Examples for manufacturers of suitable dispersing devices are e.g. IKA Prozesstechnik, Cavitron, BWS Technologie, Ytron or Ystral.

The dispersing step is preferably carried out at a temperature of 10 to 90 °C, preferably 15 to 80 °C and more preferred 20 to 60 °C.

Preferably a liquid or a mixture of a liquid and other components, which is/are used as reactant and/or solvent in the solvolysis step c. or a solvolysis reaction product of step c., such as recycling polyol, is used as dispersing medium in step b. respectively b2. More preferred the liquid or a mixture of the liquid and other components is selected from the group consisting of
- water,
- organic solvents, preferably selected from the group consisting of polyol, recycling polyol, glycol, glycerin, toluene diamine and mixtures thereof,
- a mixture comprising a base and water and/or a base and an organic solvent as defined before, preferably an aqueous solution of a base, more preferred an aqueous solution comprising a base as defined further below and water.

The dispersing medium can comprise one or more additives, preferably selected from the group consisting of wetting agents, silicone surfactants, anionic, nonionic and cationic surfactants, for example surfactants like those obtainable from Evonik Industries AG under the tradename Tomadol^{®}.

Preferably the polyurethane powder, more preferred the snow like fluffy powder, is put together with the dispersing medium in a weight ratio of from 1:5 to 1:40, more preferably from 1:8 to 1:30 and even more preferably from 1:10 to 1:25. In a preferred process the dispersing medium is charged at first to the system and circulated. Then the polyurethane snow is added gradually until the desired weight ratio is achieved. After that the dispersing process can be operated according to the requirements, e.g. running several passages or run a pump-recycling for a defined process time. In a further preferred process, both components liquid and solid are added simultaneously to the dispersing device and mixed in a single-pass.

In a preferred embodiment excess dispersion medium is separated from the finished dispersion, preferably simply mechanically, e.g. with the help of a sieving. The separated excess dispersing liquid can then be recycled to produce new dispersion.

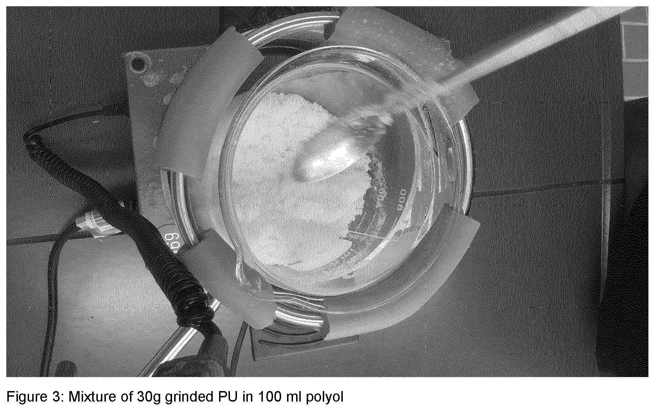

The polyurethane content of the dispersion after step b. and/or the dispersion used for step c. is preferably in a range of from 5 to 18 and more preferred 8 to 15 percent by weight. In case of a too low solid concentration it might occur, that too much liquid is entering into the reaction in step c and might negatively interfere the reaction conditions. In case of a too high solid concentration, the dispersing step, handling and pumping of the dispersion can be hindered and result to an uneven solid distribution. As shown in Comparative Example 2 and Figure 3, if the solid content is too high, a wetted PU powder rather than a dispersion is obtained.

Further preferred the particle size of the polyurethane particles, in the dispersion after step b. and/or the dispersion used for step c. is in a range of from 10 to 2000 µm, preferably 50 to 1500 µm and more preferred 100 to 1000 µm.

Preferably the dispersion obtained in step b. is fed into a reactor for step c. It has proven to be advantageous to agitate the dispersion continuously and intensively, e.g. by forced conveyance with pump, high flow rates, etc., to avoid possible separation effects. The dispersion obtained in step b. can be fed directly into a reactor for step c. Alternatively intermediate buffering of the dispersion may be done, preferably in a stirred vessel or a vessel with an external circulation line and pump. In principle this stage can be used for an additional treatment of the dispersion, e.g. tempering to a defined temperature, a purification and/or sanitization of the employed polyurethane. A purification could include additional washing steps, a sanitization could include a treatment with hydrogen peroxide, ozone, heat, etc..

In an alternative embodiment the dispersion can be prepared in the solvolysis reactor. In this embodiment it is preferred that the entire amount of the polyurethan raw material is dispersed before the solvolysis reaction is started. In this embodiment costs for buffer tanks can be avoided. Internal or external dispersing device can be used. External devices are devices which convert the reaction mixture that has been pumped out of the reactor into a dispersion and pump the dispersion back into the reactor. Internal dispersing devices are used for preparation of the dispersion in the solvolysis reactor, preferably single- or multi-stage rotor-stator systems with different geometries or fast running dissolver disks or sawtooth impellers are used. The process of this embodiment of the invention differs from processes wherein a dry polyurethane powder is fed into a solvolysis reactor comprising a stirred reaction solution is, that a dispersing device is used in addition to or instead of a conventional stirrer to generate a homogeneous dispersion. Thus, the polyurethane is not just stirred in the reaction medium. In case the dispersing medium used to prepare the dispersion in the solvolysis reactor already comprises all reactants for the solvolysis, solvolysis usually starts with increasing the temperature of the dispersion after finalizing the dispersing step. In case the dispersion in the solvolysis reactor does not comprise all reactants needed for solvolysis, temperature of the dispersion can be increased to the reaction temperature of the solvolysis and the missing reactants can be added to the reactor or the missing reactants can be added to the dispersion in the reactor and thereafter, the temperature of the dispersion is increased to the reaction temperature of the solvolysis or the missing reactants can be added to the dispersion in the reactor during heat up of the dispersion.

If conveying against an increased pressure in the reactor is necessary, preferably during feeding the solvolysis reactor, this can be carried out, for example by pumps or pressurized dosing containers, whereby in contrast to the dosing of dry polyurethane foam significantly smaller pipe cross-sections and more compact designs are possible.

Step b., in particular if it is carried out in as two-step process b1. and b2., simultaneously solves two problems with regard to the solvolysis reaction in step c. On the one hand, the polyurethane is converted into a well-dosable, easy-to-convey and dense form, which allows a good and high loading of the reactor. On the other hand, the polyurethane particles have a small particle size and a large outer surface, which, despite the dense shape, allows rapid conversion in the reactor.

In step c., any known method for solvolysis, in particular alcoholysis, preferably glycolysis and methanolysis, aminolysis, amonolysis, hydrolysis or acidolysis, can be used.

Preferably step c. is carried out at a temperature of from 80°C to 200°C, preferably 90°C to 180°C, more preferred 95°C to 170°C and most preferred 100°C to 160°C, If the reaction temperature is too low, conversation rate and yield are too low. If the reaction temperature is too high, unwanted side reactions take place and the energy consumption is very high.

As mentioned before, it is a particular benefit of the process of the invention, that the reaction times for step c. can be very low. It is thus, preferred if the solvolysis is carried out for 1 minute to 14 hours, preferably 1 minute to 12 hours, more preferred 5 minutes to 10 hours, even more preferred 10 minutes to 5 hours, particular preferred 20 minutes to 2 hours, especially preferred 20 minutes to 1 hour and most preferred 20 minutes to 50 minutes. The reaction time is defined to be the time beginning from the moment the reaction mixture reaches the target reaction temperature and ending at the moment the reaction temperature deviates permanently from the target reaction temperature. "Permanently" means that small fluctuations around the target reaction temperature, caused by the temperature controlling process, do not define the end of the reaction time. Preferably at the end of the reaction time the reaction mixture is cooled down permanently below the target temperature.

If the reaction is carried out at different target temperatures, i.e. is carried out in different phases at different temperatures, all reaction times in the temperature ranges defined above are summarized.

The solvolysis is preferably carried out under atmospheric pressure. Depending on the solvolysis method and the raw material, it might be beneficial to further increase the speed of the reaction if step c. is carried out under elevated pressure, in particular under a pressure of from 100 to 1500 kPa (1 to 15 bara), preferably 100 to 1000 kPa (1 to 10 bara), more preferred 100 to 500 kPa (1 to 5 bara).

In a preferred embodiment step c. of the process of the invention is carried out as hydrolysis. More preferred the polyurethane dispersion obtained in step b. is contacted with water in the presence of a base and a quaternary ammonium salt as catalyst to yield an active hydrogen containing polyether, preferably polyether polyol, and an organic polyamine. The base is preferably used as aqueous solution, particular preferred as saturated aqueous base solution.

The process of this embodiment of the invention will result in the effective hydrolytic cleavage of the urethane and urea bonds present in the polyurethane being treated so as to generate active hydrogen containing polyether, in particular polyether polyols, polyamines, and, if the polyurethane was prepared using chain extenders or curatives, low molecular weight glycols, diols, diamines.

The structure of the active hydrogen containing polyether, preferably polyether polyols, recovered in the process of the invention correlates to the structure of the polyether polyols used to prepare the polyurethane to be treated in the process of the invention.

The structure of the polyamines recovered in this embodiment of the process of the invention correlates to the structure of the polyisocyanates used to prepare the polyurethane to be treated in the process of the invention. "Polyamines" includes diamines and preferably includes amines having two or more primary amino groups in the molecule.

In a first particular preferred embodiment the hydrolysis in step c. is carried out by contacting the polyurethane dispersion obtained in step b. with water in the presence of a base-catalyst-combination (I), wherein the base comprises an alkali metal cation and/or an ammonium cation and has a pKb value at 25°C of from 1 to 10, and the catalyst is selected from the group consisting of quaternary ammonium salts containing an ammonium cation containing 6 to 30 carbon atoms and organic sulfonates containing at least 7 carbon atoms.

The base used in this first particular preferred embodiment comprise an alkali metal cation and/or an ammonium cation and has a pK_{b} value at 25°C of from 1 to 10, preferably 1 to 8, more preferred 1 to 7 and most preferred 1.5 to 6. Organic bases, i.e. bases comprising one or more CH bonds, or inorganic base, i.e. bases that do not comprise CH bonds, can be used. Preferably low or non-corrosive base are used. Particular preferred a base is used in the process of the invention selected from the group consisting of alkali metal phosphates, alkali metal hydrogen phosphates, alkali metal carbonates, alkali metal silicates. alkali metal hydrogen carbonates, alkali metal acetates, alkali metal sulfites, ammonium hydroxide, and mixtures thereof. Ammonium cation in the base of the invention includes NH₄⁺, NHR₃⁺, NH₂R₂⁺, NH₃R⁺, for example ammonium hydroxide includes NH₄OH, NHR₃OH, NH₂R₂OH, NH₃ROH, wherein R stand for an organic residue and wherein the residues R in the ammonium cations may be identical or different. Preferably ammonium cation of the base stands for NH₄⁺. Particular preferred the base of the invention does not comprise alkaline earth metal cations.

Even more preferred a base is used selected from the group consisting of alkali metal phosphates, alkali metal carbonates, alkali metal silicates. ammonium hydroxide, and mixtures thereof.

Most preferred a base is used selected from the group consisting of alkali metal carbonates, alkali metal silicates, and mixtures thereof.

Preferred alkali metals are selected from the group consisting of Na, K and Li and mixtures thereof, most preferred Na and K and mixtures thereof.

Use of the bases described before allows to run the process of the invention in standard equipment, preferably in steel reactors, without special corrosion protection and thus, significantly contributes to a reduction of the invest costs for the plants. It is also possible to use very cheap bases that contribute to reduced operating costs.

The amount of base in the reaction mixture must be sufficient to catalyze the desired hydrolysis of the polyurethane at a practicable rate. Preferably the weight ratio base to polyurethane is in the range of from 0.01 to 50, more preferred 0.1 to 25 and most preferred 0.5 to 20. Preferably the base is used in form of a base solution comprising a base and water, even more preferred as a saturated base solution. If a saturated base solution is used it is preferred that the weight ratio of saturated base solution to polyurethane, calculated at 25°C, is in the range of from of 0.5 to 25, more preferred 0.5 to 15, even more preferred 1 to 10 and most preferred 2 to 7.

In a second particular preferred embodiment the hydrolysis in step c. is carried out by contacting the polyurethane dispersion obtained in step b. with water in the presence of a base-catalyst-combination (II), wherein the base is a strong inorganic base having a pKb value at 25°C of < 1, and the catalyst is a quaternary ammonium salt containing an ammonium cation containing 6 to 14 carbon atoms, preferably 6 to 12 carbon atoms if the ammonium cation comprises a benzyl residue.

The bases used in this second particular preferred embodiment preferable are strong inorganic bases having a pK_{b} value at 25°C of below 1, preferably 0.5 to -2, more preferred 0.25 to -1.5 and most preferred 0 to -1. Inorganic bases are bases that do not comprise CH bonds.

Particular preferred the strong base is selected from the group consisting of alkali metal hydroxides, alkali metal oxides, alkaline earth metal hydroxides, alkaline earth metal oxides and mixtures thereof. Preferred alkali metals are selected from the group consisting of Na, K and Li and mixtures thereof, most preferred Na and K and mixtures thereof. Preferred alkaline earth metals are selected from the group consisting of Be, Mg, Ca, Sr, Ba and mixtures thereof, most preferred Mg and Ca and mixtures thereof. Most preferred alkali metals selected from the group consisting of potassium or sodium and mixtures thereof are used.

Use of the bases described before allows to run the process of the invention with higher yields at lower temperatures compared to prior art processes and thus, significantly contributes to a reduction of the operating costs.

The amount of base in the reaction mixture must be sufficient to catalyze the desired hydrolysis of the polyurethane at a practicable rate. Preferably the weight ratio of base to polyurethane is from 0.01 to 25, more preferred 0.1 to 15, even more preferred 0.2 to 10 and most preferred 0.5 to 5. The base is preferably used in form of a base solution comprising a base and water. For an efficient conversion rate, it is particular preferred if the concentration of base in the base solution is higher than or equal to 5 weight %, based on the weight of the base solution, preferably 5 to 70 weight percent, more preferred 5 to 60 weight percent, even more preferred 10 to 50 weight percent, particular preferred 15 to 40 weight percent and most preferred 20 to 40 weight percent.

In a third particular preferred embodiment the hydrolysis in step c. is carried out by contacting the polyurethane dispersion obtained in step b. with water in the presence of a base-catalyst-combination (III), wherein the base is a strong inorganic base having a pKb value at 25°C of < 1, and the catalyst is a quaternary ammonium salt containing an ammonium cation containing 15 to 30 carbon atoms, preferably 15 to 28, more preferred 15 to 24, even more preferred 16 to 22 and most preferred 16 to 20.

The strong base in base-catalyst-combination (III) is preferably selected from the group consisting of alkali metal hydroxides, alkali metal oxides, alkaline earth metal hydroxides, alkaline earth metal oxides and mixtures thereof. Even more preferred the alkali metals of the base are selected from the group consisting of Na, K and Li and mixtures thereof, most preferred Na and K and mixtures thereof and/or the alkaline earth metals are selected from the group consisting of Be, Mg, Ca, Sr, Ba and mixtures thereof, preferably Mg and Ca and mixtures thereof. Most preferred alkali metals selected from the group consisting of potassium or sodium and mixtures thereof are used.

The quaternary ammonium salt used as catalyst in the preferred and the three particular preferred embodiments preferably has the general structure R₁ R₂ R₃ R₄ NX wherein R₁,R₂,R₃, and R₄ are the same or different and are hydrocarbyl groups selected from alkyl, aryl, and arylalkyl and X is selected from the group consisting of halide, preferably chloride and/or bromide, hydrogen sulfate, alkyl sulfate, preferably methylsulfate and ethylsulfate, carbonate, hydrogen carbonate, carboxylate, preferably acetate, or hydroxide.

In the first particular preferred embodiment with the base-catalyst-combination (I) R₁,R₂,R₃, and R₄ and X are defined as follows:
- R₁ and R₂ are the same or different and are alkyl groups with 1 to 12, preferably 1 to 10, more preferred 1 to 7, even more preferred 1 to 6, especially preferred 1 to 5 and most preferred 1 to 4 carbon atoms, wherein the alkyl groups may be linear, branched, cyclic, saturated or unsaturated, most preferred are linear, saturated alkyl groups,
- R₃ is selected from the group consisting of alkyl groups with 1 to 12, preferably 1 to 10, more preferred 1 to 7, even more preferred 1 to 6, especially preferred 1 to 5 and most preferred 1 to 4 carbon atoms, aryl groups with 6 to 14, preferably 6 to 12, and most preferred 6 to 10 carbon atoms, and aralkyl groups with 7 to 14, preferably 7 to 12, and most preferred 7 to 10 carbon atoms, wherein the alkyl groups may be linear, branched, cyclic, saturated or unsaturated, most preferred linear and,
- R₄ is selected from the group consisting of alkyl groups with 3 to 12, preferably 3 to 10, more preferred 3 to 7, most preferred 4 to 6 carbon atoms, aryl groups with 6 to 14, preferably 6 to 12, and most preferred 6 to 10 carbon atoms, and aralkyl groups with 7 to 14, preferably 7 to 12, and most preferred 7 to 10 carbon atoms, wherein the alkyl groups may be linear, branched, cyclic, saturated or unsaturated, most preferred linear and saturated, and
- X is selected from the group consisting of halide, preferably chloride and/or bromide, hydrogen sulfate, alkyl sulfate, preferably methylsulfate and ethylsulfate, carbonate, hydrogen carbonate, acetate or hydroxide.

Even more preferred R₁ to R₄ are selected from the definitions provided above such that
the sum of carbon atoms in the quaternary ammonium cation is 6 to 14, preferably 7 to 14, more preferred 8 to 13
   or
that the sum of carbon atoms in the quaternary ammonium cation is 15 to 30, preferably 15 to 28, more preferred 15 to 24, even more preferred 16 to 22 and most preferred 16 to 20.

In the second particular preferred embodiment with the base-catalyst-combination (II) R₁,R₂,R₃, and R₄ and X are defined as follows:
- R₁ to R₃ are the same or different and are alkyl groups with 1 to 6, preferably 1 to 5, more preferred 1 to 4, even more preferred 1 to 3, especially preferred 1 or 2 and most preferred 1 carbon atoms, wherein the alkyl groups may be linear, branched, cyclic, saturated or unsaturated, most preferred are linear, saturated alkyl groups,
- R₄ is selected from the group consisting of alkyl groups with 3 to 11, preferably 3 to 10, more preferred 3 to 8, most preferred 4 to 6 carbon atoms, aryl groups with 6 to 11, preferably 6 to 10, and most preferred 6 to 8 carbon atoms, and aralkyl groups with 7 to 11, preferably 7 to 10, and most preferred 7 to 9 carbon atoms, wherein the alkyl groups may be linear, branched, cyclic, saturated or unsaturated, most preferred are linear, saturated alkyl groups, and
- X is selected from the group consisting of halide, preferably chloride and/or bromide, hydrogen sulfate, alkyl sulfate, preferably methylsulfate and ethylsulfate, carbonate, hydrogen carbonate, acetate or hydroxide.

Even more preferred R₁ to R₄ are selected from the definitions provided above such that
if R₄ is different from a benzyl residue, R₁ to R₄ are selected such that the sum of carbon atoms in the quaternary ammonium cation is 6 to 14, preferably 7 to 14, more preferred 8 to 13
   or
if R₄ is a benzyl residue, R₁ to R₃ are selected such that the sum of carbon atoms in the quaternary ammonium cation is 6 to 12, preferably 7 to 12, more preferred 8 to 11.

In the third particular preferred embodiment with the base-catalyst-combination (III) R₁,R₂,R₃, and R₄ and X are defined as follows:
- R₁ and R₂ are the same or different and are alkyl groups with 1 to 12, preferably 1 to 10, more preferred 1 to 7, even more preferred 1 to 6, especially preferred 1 to 5 and most preferred 1 to 4 carbon atoms, wherein the alkyl groups may be linear, branched, cyclic, saturated or unsaturated, most preferred are linear, saturated alkyl groups,
- R₃ is selected from the group consisting of alkyl groups with 1 to 12, preferably 1 to 10, more preferred 1 to 7, even more preferred 1 to 6, especially preferred 1 to 5 and most preferred 1 to 4 carbon atoms, aryl groups with 6 to 14, preferably 6 to 12, and most preferred 6 to 10 carbon atoms, and aralkyl groups with 7 to 14, preferably 7 to 12, and most preferred 7 to 10 carbon atoms, wherein the alkyl groups may be linear, branched, cyclic, saturated or unsaturated, most preferred linear and,
- R₄ is selected from the group consisting of alkyl groups with 3 to 12, preferably 3 to 10, more preferred 3 to 7, most preferred 4 to 6 carbon atoms, aryl groups with 6 to 14, preferably 6 to 12, and most preferred 6 to 10 carbon atoms, and aralkyl groups with 7 to 14, preferably 7 to 12, and most preferred 7 to 10 carbon atoms, wherein the alkyl groups may be linear, branched, cyclic, saturated or unsaturated, most preferred linear and saturated, and
- X is selected from the group consisting of halide, preferably chloride and/or bromide, hydrogen sulfate, alkyl sulfate, preferably methylsulfate and ethylsulfate, carbonate, hydrogen carbonate, acetate or hydroxide.

Even more preferred R₁ to R₄ are selected from the definitions provided above such that that the sum of carbon atoms in the quaternary ammonium cation is 15 to 30, preferably 15 to 28, more preferred 15 to 24, even more preferred 16 to 22 and most preferred 16 to 20.

In the preferred and the three particular preferred embodiments for step c., quaternary ammonium salts are used as phase transfer catalysts. Although the addition of even trace amounts of these phase transfer catalysts will accelerate the hydrolysis rate, it is preferred that at least 0.5 weight percent catalyst, based on the weight of the polyurethane be used, more preferably 0.5 to 15 weight percent, even more preferred 1 to 10 weight percent, particular preferred more 1 to 8 weight percent, especially preferred 1 to 7 and most preferred 1 to 6 weight percent.

In the preferred and the three particular preferred embodiments for step c., water functions as a reactant in the desired polyurethane hydrolysis reaction and thus does not need to be present in stoichiometric excess relative to the urethane functional groups in the polymer to be hydrolyzed, it will generally be desirable to utilize a substantial quantity of water in order that it may conveniently serve as a reaction medium and solvent or carrier for the strong base and activating agent. For these reasons, the water is preferably present in condensed (liquid) form. Typically, the weight ratio of polyurethane to water is from 3:1 to 1:15.

The hydrolysis is preferably conducted at atmospheric pressure, although super atmospheric pressures may be employed, if desired. Optionally, a water-miscible or water-immiscible solvent such as alcohol, ketone, ester, ether, amide, sulfoxide, halogenated hydrocarbon, aliphatic hydrocarbon, or aromatic hydrocarbon may be present in the reaction mixture to facilitate the hydrolysis process or to aid in recovering the reaction products.

The hydrolysis reaction may be carried out in a batch, continuous, or semi-continuous manner in any appropriate vessel or other apparatus (for example, a stirred tank reactor or screw extruder) whereby the polyurethane may be contacted with water in the presence of the base and activating agent. It will generally be preferred to agitate or stir the reaction components so as to assure intimate contact, rapid hydrolysis rates, and adequate temperature control.

As will be demonstrated in the examples below, choosing the hydrolyzation processes of the preferred and the three particular preferred embodiments described before is beneficial because the recycled polyols are of excellent quality and are very similar or even identical to the polyols the polyurethane raw material was made from. The recycling polyols can be used for the production of new polyurethane foam, preferably flexible polyurethane foam, in larger amounts while maintaining the previously known product quality of polyurethane foams. They can in particular be used to produce flexible polyurethane foams that were produced without the use of recycled polyol so far, with regard to the physical and mechanical properties of the resulting polyurethane foams.

In addition, very fast reaction times for the hydrolysis of 30 minutes with excellent yields have been achieved for the preferred and the three particular preferred embodiments.

The first particular preferred embodiment with base-catalyst-combination (I), has the additional benefit that a wide variety of cheap and/or low or non-corrosive bases can be used to effectively depolymerize polyurethanes. The process in this embodiment is very flexible regarding to the catalyst used. Inventors found out, that ammonium cations with a low number of carbon atoms can be effectively used as well as such with a higher number of carbon atoms. This allows more flexibility regarding the operating temperature.

The process of the invention preferably comprising an additional step d., of separating and recovering the reaction products of the solvolysis, preferable organic polyamine and/or an active hydrogen containing polyether, preferably a polyether polyol.

The active hydrogen containing polyether, preferably polyether polyols, organic polyamines, chain extenders, and curatives produced in the solvolysis may be separated and recovered from the crude reaction mixture using any suitable method or combination of methods known in the art such as for example extraction (using water-immiscible organic solvents as the extractant, for example), distillation, precipitation, filtration.

### Analytical methods

### Particle size polyurethane powder

For the measurement of the particle size distribution of the polyurethane after step b1 (dry milling) as well as after step b2 (wet dispersion) a laser diffraction analyzer was used (type: Horiba LA-950). For a better dispersion of the particles during the measurement the samples were treated with ultrasound for max. 120 sec.

Without further elaboration, it is believed that one skilled in the art can, using the preceding description, utilize the present invention of its fullest extent. The following examples, therefore, are to be considered as merely illustrative and not limitative of the claims or remainder of the disclosure in any.

### Examples

### Example 1: Preparation of an aqueous dispersion

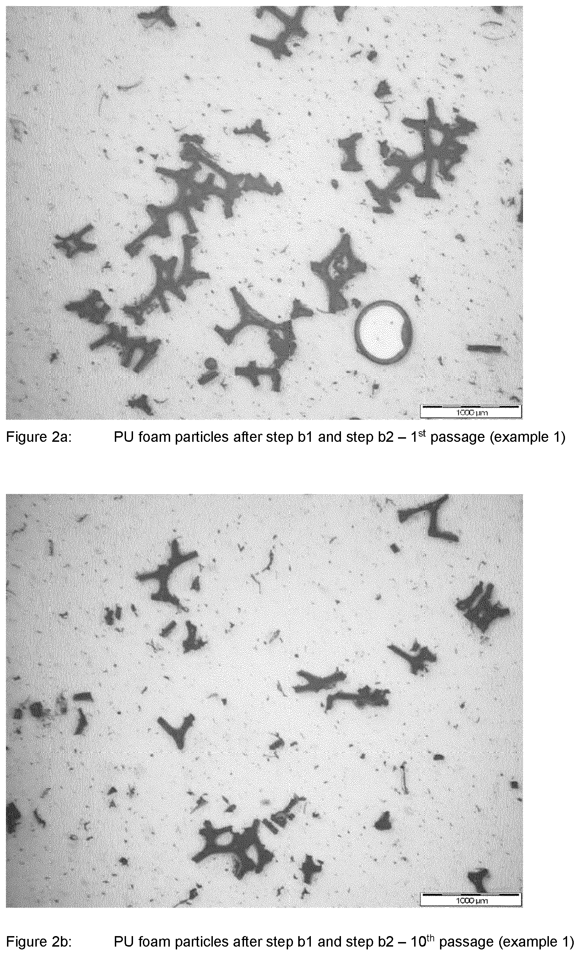

As raw material polyurethane foam cubes based on 100% polyol were used, with edge lengths of approx. 16x24x24 cm. The cubes were cut by hand into coarse pieces and dosed into a cutting mill of the company Condux (type CS 230/220/N1). The mill was equipped with a sieve layer with a 2 mm square perforation. A snow like fluffy powder was obtained from the cutting mill, which was dispersed in water. This was done in a colloid mill of the company IKA (type MK 2000/5), which was equipped with a cone insert (type MKO). The polyurethane snow was dosed together with water in a weight ratio of 1:20 into the colloid mill and dispersed in passage operation mode over 10 passages. A measurement of the particle sizes at the end of the process resulted in an average particle size of d₅₀ = 592 µm. The achieved opening of the foam cell structure is shown in figure 2a, 2b. The dispersion thus obtained was used for the subsequent hydrolysis reaction.

### Example 2: Preparation of a dispersion in aqueous potassium carbonate solution

As raw material polyurethane foam cubes based on 100% polyol were available, with edge lengths of approx. 16x24x24 cm. The cubes were cut by hand into coarse pieces and dosed into a cutting mill of the company Condux (type CS 230/220/N1). The mill was equipped with a sieve layer with a 4 mm square perforation. A snow like fluffy powder was obtained from the cutting mill, which was dispersed in a colloid mill of Fa IKA (type MK 2000 / 5) with cone insert (type MKO). A 40 wt. % K₂CO₃ solution in water was used as a dispersing medium. The K₂CO₃ solution was mixed with the additive Tomadol 1-5, wherein the proportion was calculated so that based on the dry amount of the polyurethane 1% of the additive was used. For the preparation of the dispersion, 50 g of polyurethane (dry) snow and 1.5 kg of K₂CO₃ solution were used, which in turn contained 0.5 g of Tomadol 1-5.

The components were simultaneously metered into the colloid mill and then dispersed in passages over 10 passages. The measurement of the particle sizes at the end of the process resulted in an average particle size of d₅₀ = 525 microns. A dispersion was used for the subsequent hydrolysis reaction.

### Example 3: Preparation of a dispersion in aqueous potassium carbonate solution

In a modification of the experiment described in Example 2, the dispersion was finally filtered via a 300 µm sieve to separate excess dispersing fluid before using the dispersion for hydrolysis. The amount of the dispersing fluid was, thus, reduced by about 50%.

### Example 4: Preparation of a dispersion in aqueous potassium carbonate solution by means of recirculation

Example 2 was repeated with the following modifications:
The polyurethane snow obtained from the cutting mill was dispersed in the colloid mill in the recirculation mode rather than in the passage mode. A pump was installed in the liquid drain of the colloid mill to pump back the dispersing medium into a feed tank above the mill. The feed tank was filled with the dispersing medium, this time including Tomadol 1-5 and the mill was started. While pumping the dispersing medium through the mill and back to the feed tank, the required amount of polyurethane snow was continuously metered into the liquid circuit. After reaching the polyurethane target concentration, the dispersion was circulated in the liquid circuit for a short time and then withdrawn for further use. A measurement of the particle sizes at the end of the process resulted in an average particle size of d₅₀ = 694 µm.

### Example 5: Hydrolysis of polyurethane snow dispersion

From the 50 g polyurethane snow dispersion of example 1 an excess of the water phase was separated by filtration and 490 g of a 40 wt. % K₂CO₃ solution in water was added to the dispersion. The resulting dispersion was further mixed with 2.5 g of the quaternary ammonium salt Tetrabutylammoniumhydrogensulfate (C = 16). The suspension is added to a pressure-resistant reactor. In the reactor, sufficient mixing is ensured.

By means of connected thermostats in the reactor jacket, the stirred mixture is heated to the desired reaction temperature and cooled after the completion of the reaction. The reaction was carried out at 150 ° C internal temperature and increased pressure (equal to or higher than boiling pressure of the reaction mixture). The reaction was interrupted by discharging the reaction solution from the reactor after 30 minutes.

The conversion rate was measured by weighing the dried residue of the organic fraction of the reaction mixture and is shown in Table 1. For this the organic phase and DMSO soluble solids were dissolved in DMSO. Undissolved solids, i.e. remaining PU and K₂CO₃, were filtered and washed with HCl. By washing with HCl, potassium carbonate is dissolved and only unreacted PU remains on the filter.

### Comparative Example 1:

The procedure described in Example 5 was repeated in Comparative Example 1. Instead of an inventive polyurethane snow dispersion, polyurethane foam cubes were used for hydrolysis, which were obtained by hot compression of the same raw polyurethane foam at 160 °C and 10 min holding time and cutting the hot compressed polyurethane into cubes with an average size of approximately 1x1x2 cm. The conversion rate was determined at different times and is shown in Table 1.

**Table 1**

| Reaction time | Comparative Example 1 | Example 5 |
|---|---|---|
| min | Conversion rate [%] | Conversion rate [%] |
| 30 | 69 | 100 |
| 75 | 93 | |
| 90 | 97 | |

As can be seen in Table 1, the inventive dispersion of Example 5, which was obtained by use of steps b1. (cutting mill) and b2. (dispersing step) can be converted completely within 30 min. In contrast thereto an identical polyurethane foam, which was treated by hot compressing and cutting, as suggested in the prior art, could be converted to only 97% even after 90 minutes reaction time.

### Comparative Example 2:

In Example 1 of US 2016/00347927, 500g rigid PU was grinded. During grinding in sum 500g recycle polyol was added and a mixture comprising 50 % by wight grinded PU powder in polyol was obtained. US'927 does not provide details of the used grinder. Thus a direct reproduction of the example is impossible.

To, nevertheless, compare the grinded material of US'927 with the present invention, pre-grinded polyol was added to 100 ml (97g) of polyol under stirring until the resulting mixture forms a wetted powder rather than a dispersion, i.e. until the reaction mixture can no longer pe pumped through a pipe. It was found that after addition of 30g grinded PU a wet powder as shown in Figure 3 was obtained. Even under pressure no liquid could be pressed out of the wetted powder.

This shows that a mixture of grinded PU and polyol having a PU content of 30 or more percent by weight, as the grinded powder obtained in Example 1 of US'927, cannot be regarded as dispersion, in particular not as pumpable dispersions as those of the present invention. A mixture of grinded PU in polyol with such high solid content must be treated and conveyed with conveying means for solids like screw conveyors or conveyor belts and cannot be pumped through pipes with small diameters.

An attempt to produce a mixture of grinded PU in polyol with a solvent content of 30% by weight in a grinder resulted in a wetted powder, too. The wet powder sticked to the walls of the mill and caused a high effort to clean the mill after the experiment. Continuous operation of the mill with such material is impossible.

Hydrolysis experiments conducted with the wetted powder obtained in Comparative Example 2 under conditions as described in Comparative Example 1 led to incomplete conversion even if the reaction time was 50% longer compared to the use of dispersions according to the invention

## Claims

1. A method of solvolyzing a polyurethane, preferably a polyurethane produced by reacting an active hydrogen containing polyether and an organic polyisocyanate, comprising the steps:
a. Providing the polyurethane, preferably a polyurethane foam,
b. Preparing a dispersion from the polyurethane,
c. Solvolysis of the polyurethane dispersion, preferably solvolysis is carried out as alcoholysis, aminolysis, amonolysis, hydrolysis or acidolysis,
**characterized in that**
the polyurethane to be dispersed has an average particle size, measured by laser diffraction analyzer as described in the description, of 0.1 to 12 mm, and
the polyurethane content in the dispersion after step b. and/or the dispersion used for step c. is in a range of from 4 to 20 percent by weight.

2. A method according to Claim 1,
**characterized in that** step b. comprises the steps
b1. Chopping, pulverizing, grinding, milling, cutting or otherwise comminuting the polyurethane provided in step a., preferably with a cutting mill or a comminution device selected from the group consisting of roller mill, crusher, shredder and extruder to obtain a polyurethane powder, preferably a snow like fluffy powder,
b2. Producing a dispersion from the polyurethane powder obtained in step b1., preferably the snow like fluffy powder, obtained in step b1., preferably by use of devices selected from the group consisting of colloid mills, more preferred cone mills, single- or multi-stage rotor-stator systems with different geometries or fast running dissolver disk or sawtooth impeller in a stirred vessel.

3. A method according to claim 1 or 2,
**characterized in that** the polyurethane powder to be dispersed has an average particle size, , measured by laser diffraction analyzer as described in the description, of 0.2 to 4 mm, more preferred 0.5 to 2 mm and/or has a bulk density of higher than 30 kg/m³, more preferably higher than 60 kg/m³ and even more preferably of from 90 kg/m³ to 200 kg/m³.

4. A method according to claim 2 or 3,
**characterized in that**
step b1. is carried out in a temperature range between ambient temperature and 120 °C, preferably between ambient temperature and 100 °C, more preferred between ambient temperature and 80 °C and most preferred between ambient temperature and 60 °C
and / or
step b2. is carried out at a temperature of 10 to 90 °C, preferably 15 to 80 °C and more preferred 20 to 60 °C.

5. A method according to any one of claims 1 to 4,
**characterized in that**
a liquid or a mixture of liquid and other components, which is/are used as reactant and/or solvent in the solvolysis step c. or a solvolysis reaction product of step c., such as recycling polyol, is used as dispersing medium in step b. respectively b2, more preferred the liquid or mixture of liquid and other components is selected from the group consisting of
- water,
- organic solvents, preferably selected from the group consisting of polyol, recycling polyol, glycol, glycerin, toluene diamine and mixtures thereof,
- a mixture comprising a base and water and/or a base and an organic solvent as defined before, preferably an aqueous solution of a base, more preferred an aqueous solution comprising a base as defined further below and water,
and/or
that the polyurethane powder, preferably the snow like fluffy powder, is mixed with the dispersing medium in a weight ration of from 1:5 to 1:40, more preferably from 1:8 to 1:30 and even more preferably from 1:10 to 1:25,
and/or
that the polyurethane content in the dispersion after step b. and/or the dispersion used for step c. is in a range of from 5 to 18 and more preferred 8 to 15 percent by weight, and/or
the particle size of the polyurethane particles, measured by laser diffraction analyzer as described in the description, in the dispersion after step b. and/or the dispersion used for step c. is in a range of 10 to 2000 µm, preferably 50 to 1500 µm and more preferred 100 to 1000 µm.

6. A method according to any one of claims 1 to 5,
**characterized in that** step b or b2., is carried out, in the solvolysis reactor and the entire amount of the polyurethane is dispersed before the solvolysis reaction is started.

7. A method according to any one of claims 1 to 6,
characterized that in step c. is carried out as a hydrolysis, preferably a polyurethane dispersion is contacted with water in the presence of a base and as catalyst quaternary ammonium salt to yield an active hydrogen containing polyether, preferably polyether polyol, and an organic polyamine.

8. A method according to claim 7,
**characterized in that** the hydrolysis in step c. is carried out by contacting the polyurethane dispersion obtained in step b. with water in the presence of a base-catalyst-combination (I), (II) or (III), wherein
the base-catalyst-combination (I) comprises a base comprising an alkali metal cation and/or an ammonium cation and having a pKb value at 25°C of from 1 to 10, and a catalyst selected from the group consisting of quaternary ammonium salts containing an ammonium cation containing 6 to 30 carbon atoms and organic sulfonates containing at least 7 carbon atoms,
or
the base-catalyst-combination (II) comprises a strong inorganic base having a pKb value at 25°C of < 1, and as catalyst a quaternary ammonium salt containing an ammonium cation containing 6 to 14 carbon atoms, preferably 6 to 12 carbon atoms if the ammonium cation comprises a benzyl residue,
or
the base-catalyst-combination (III) comprises a strong inorganic base having a pKb value at 25°C of < 1, and as catalyst a quaternary ammonium salt containing an ammonium cation containing 15 to 30 carbon atoms, preferably 15 to 28, more preferred 15 to 24, even more preferred 16 to 22 and most preferred 16 to 20.

9. The method of claim 8,
characterized ion that the alkali metal cation comprising base in base-catalyst-combination (I) is selected from the group consisting of alkali metal phosphates, alkali metal hydrogen phosphates, alkali metal carbonates, alkali metal silicates. alkali metal hydrogen carbonates, alkali metal acetates, alkali metal sulfites, ammonium hydroxide, and mixtures thereof.

10. The method of claim 9 wherein the alkali metals are selected from the group consisting of Na, K and Li and mixtures thereof, most preferred Na and K and mixtures thereof.

11. The method of claim 8,
characterized ion that the strong base in base-catalyst-combination (II) or (III) is selected from the group consisting of alkali metal hydroxides, alkali metal oxides, alkaline earth metal hydroxides, alkaline earth metal oxides and mixtures thereof.

12. The method of claim 11 wherein the alkali metals are selected from the group consisting of Na, K and Li and mixtures thereof, most preferred Na and K and mixtures thereof and/or the alkaline earth metals are selected from the group consisting of Be, Mg, Ca, Sr, Ba and mixtures thereof, preferably Mg and Ca and mixtures thereof.

13. The method of any one of claim 7 to 12 wherein the catalyst is a quaternary ammonium salt having the general structure R₁ R₂ R₃ R₄ NX wherein R₁,R₂,R₃, and R₄ are the same or different and are hydrocarbyl groups selected from alkyl, aryl, and arylalkyl and X is selected from the group consisting of halide, preferably chloride and/or bromide, hydrogen sulfate, alkyl sulfate, preferably methylsulfate and ethylsulfate, carbonate, hydrogen carbonate, carboxylate, preferably acetate, or hydroxide.

14. The method of claim 13, wherein
for base-catalyst-combination (I) and (III) the catalyst is a quaternary ammonium salt having the general structure R₁ R₂ R₃ R₄ NX with
- R₁ and R₂ are the same or different and are alkyl groups with 1 to 12, preferably 1 to 10, more preferred 1 to 7, even more preferred 1 to 6, especially preferred 1 to 5 and most preferred 1 to 4 carbon atoms, wherein the alkyl groups may be linear, branched, cyclic, saturated or unsaturated, most preferred are linear, saturated alkyl groups,
- R₃ is selected from the group consisting of alkyl groups with 1 to 12, preferably 1 to 10, more preferred 1 to 7, even more preferred 1 to 6, especially preferred 1 to 5 and most preferred 1 to 4 carbon atoms, aryl groups with 6 to 14, preferably 6 to 12, and most preferred 6 to 10 carbon atoms, and aralkyl groups with 7 to 14, preferably 7 to 12, and most preferred 7 to 10 carbon atoms, wherein the alkyl groups may be linear, branched, cyclic, saturated or unsaturated, most preferred linear and,
- R₄ is selected from the group consisting of alkyl groups with 3 to 12, preferably 3 to 10, more preferred 3 to 7, most preferred 4 to 6 carbon atoms, aryl groups with 6 to 14, preferably 6 to 12, and most preferred 6 to 10 carbon atoms, and aralkyl groups with 7 to 14, preferably 7 to 12, and most preferred 7 to 10 carbon atoms, wherein the alkyl groups may be linear, branched, cyclic, saturated or unsaturated, most preferred linear and saturated, and
- X is selected from the group consisting of halide, preferably chloride and/or bromide, hydrogen sulfate, alkyl sulfate, preferably methylsulfate and ethylsulfate, carbonate, hydrogen carbonate, acetate or hydroxide.
and/or
for base-catalyst-combination (II) the catalyst is a quaternary ammonium salt having the general structure R₁ R₂ R₃ R₄ NX with
- R₁ to R₃ are the same or different and are alkyl groups with 1 to 6, preferably 1 to 5, more preferred 1 to 4, even more preferred 1 to 3, especially preferred 1 or 2 and most preferred 1 carbon atoms, wherein the alkyl groups may be linear, branched, cyclic, saturated or unsaturated, most preferred are linear, saturated alkyl groups,
- R₄ is selected from the group consisting of alkyl groups with 3 to 11, preferably 3 to 10, more preferred 3 to 8, most preferred 4 to 6 carbon atoms, aryl groups with 6 to 11, preferably 6 to 10, and most preferred 6 to 8 carbon atoms, and aralkyl groups with 7 to 11, preferably 7 to 10, and most preferred 7 to 9 carbon atoms, wherein the alkyl groups may be linear, branched, cyclic, saturated or unsaturated, most preferred are linear, saturated alkyl groups, and
- X is selected from the group consisting of halide, preferably chloride and/or bromide, hydrogen sulfate, alkyl sulfate, preferably methylsulfate and ethylsulfate, carbonate, hydrogen carbonate, acetate or hydroxide.

15. The method of claim 13 or 14, wherein
for base-catalyst-combination (I)
R₁ to R₄ are selected such that the sum of carbon atoms in the quaternary ammonium cation is 6 to 14, preferably 7 to 14, more preferred 8 to 13
or
R₁ to R₄ are selected such that the sum of carbon atoms in the quaternary ammonium cation is 15 to 30, preferably 15 to 28, more preferred 15 to 24, even more preferred 16 to 22 and most preferred 16 to 20.

16. The method of claim 13 or 14, wherein
for base-catalyst-combination (II)
R₄ is different from a benzyl residue and R₁ to R₄ are selected such that the sum of carbon atoms in the quaternary ammonium cation is 6 to 14, preferably 7 to 14, more preferred 8 to 13
or
R₄ is a benzyl residue, R₁ to R₃ are selected such that the sum of carbon atoms in the quaternary ammonium cation is 6 to 12, preferably 7 to 12, more preferred 8 to 11.

17. The method of any one of claims 7 to 16 wherein at least 0.5 weight percent of the quaternary ammonium salt is used as phase transfer catalysts, based on the weight of the polyurethane, is used, more preferably 0.5 to 15 weight percent, even more preferred 1 to 10 weight percent, particular preferred more 1 to 8 weight percent, especially preferred 1 to 7 and most preferred 2 to 6 weight percent.

18. The method of any one of claims 1 to 17 comprising an additional step of separating and recovering the reaction products of the solvolysis, preferable organic polyamine and/or an active hydrogen containing polyether, preferably a polyether polyol.

19. The method of any one of claims 1 to 18, wherein the solvolysis in step c. is carried out
at a temperature of from 80°C to 200°C, preferably 90°C to 180°C, more preferred 95°C to 170°C and most preferred 100°C to 160°C
and/or
for 1 minute to 14 hours, preferably 1 minute to 12 hours, more preferred 10 minutes to 10 hours, even more preferred 10 minutes to 15 hours, particular preferred 20 minutes to 2 hours, especially preferred 20 minutes to 1 hour and most preferred 20 minutes to 50 minutes.

20. The method of any one of claims 1 to 19, wherein the solvolysis in step c. is carried out at atmospheric pressure or under elevated pressure, in particular under a pressure of from 100 to 1500 kPa (1 to 15 bara), preferably 100 to 1000 kPa (1 to 10 bara), more preferred 100 to 500 kPa (1 to 5 bara).

## Patentansprüche

1. Verfahren zur Solvolysierung eines Polyurethans, vorzugsweise eines Polyurethans, das durch Umsetzung eines aktiven Wasserstoff enthaltenden Polyethers und eines organischen Polyisocyanats hergestellt ist, umfassend die Schritte:
a. Bereitstellen des Polyurethans, vorzugsweise eines Polyurethanschaums,
b. Herstellen einer Dispersion aus dem Polyurethan,
c. Solvolyse der Polyurethandispersion, wobei die Solvolyse vorzugsweise als Alkoholyse, Aminolyse, Amonolyse, Hydrolyse oder Acidolyse durchgeführt wird,
**dadurch gekennzeichnet, dass**
das zu dispergierende Polyurethan eine mittlere Partikelgröße, gemessen durch ein Laserbeugungsanalysesystem wie in der Beschreibung beschrieben, von 0,1 bis 12 mm aufweist und
der Polyurethangehalt in der Dispersion nach Schritt b. und/oder der für Schritt c. verwendeten Dispersion in einem Bereich von 4 bis 20 Gew.-% liegt.

2. Verfahren nach Anspruch 1,
**dadurch gekennzeichnet, dass** Schritt b. die Schritte umfasst
b1. Zerhacken, Pulverisieren, Schleifen, Mahlen, Schneiden oder sonstiges Zerkleinern des bei Schritt a. bereitgestellten Polyurethans, vorzugsweise mit einer Schneidmühle oder einer Zerkleinerungsvorrichtung ausgewählt aus der Gruppe bestehend aus Walzenmühle, Brecher, Schredder und Extruder, um ein Polyurethanpulver, vorzugsweise ein schneeartiges flockiges Pulver, zu erhalten,
b2. Herstellen einer Dispersion aus dem bei Schritt b1. erhaltenen Polyurethanpulver, vorzugsweise dem bei Schritt b1. erhaltenen schneeartigen flockigen Pulver, vorzugsweise unter Verwendung von Vorrichtungen ausgewählt aus der Gruppe bestehend aus Kolloidmühlen, bevorzugter Kegelmühlen, ein- oder mehrstufigen Rotor-Stator-Systemen mit verschiedenen Geometrien oder schnelllaufender Dissolverscheibe oder Sägezahnrad in einem Rührgefäß.

3. Verfahren nach Anspruch 1 oder 2,
**dadurch gekennzeichnet, dass** das zu dispergierende Polyurethanpulver eine mittlere Partikelgröße, gemessen durch ein Laserbeugungsanalysesystem wie in der Beschreibung beschrieben, von 0,2 bis 4 mm, bevorzugter 0,5 bis 2 mm, und/oder eine Schüttdichte von höher als 30 kg/m³, bevorzugter höher als 60 kg/m³ und sogar bevorzugter von 90 kg/m³ bis 200 kg/m³, aufweist.

4. Verfahren nach Anspruch 2 oder 3,
**dadurch gekennzeichnet, dass**
Schritt b1. in einem Temperaturbereich zwischen Umgebungstemperatur und 120 °C, vorzugsweise zwischen Umgebungstemperatur und 100 °C, bevorzugter zwischen Umgebungstemperatur und 80 °C und höchst bevorzugt zwischen Umgebungstemperatur und 60 °C durchgeführt wird,
und/oder
Schritt b2. bei einer Temperatur von 10 bis 90 °C, vorzugsweise 15 bis 80 °C und bevorzugter 20 bis 60 °C durchgeführt wird.

5. Verfahren nach einem der Ansprüche 1 bis 4,
**dadurch gekennzeichnet, dass**
eine Flüssigkeit oder ein Gemisch aus Flüssigkeit und anderen Komponenten, die bei dem Solvolyseschritt **c.** als Reaktant und/oder Lösungsmittel verwendet wird/werden, oder ein Solvolysereaktionsprodukt aus Schritt c., wie z.B. Recycling-Polyol, als Dispergiermedium bei Schritt b. bzw. b2 verwendet wird, wobei die Flüssigkeit oder das Gemisch aus Flüssigkeit und anderen Komponenten bevorzugter ausgewählt ist aus der Gruppe bestehend aus
- Wasser,
- organischen Lösungsmitteln, vorzugsweise ausgewählt aus der Gruppe bestehend aus Polyol, Recycling-Polyol, Glycol, Glycerin, Toluoldiamin und Gemischen davon,
- einem Gemisch umfassend eine Base und Wasser und/oder eine Base und ein wie vorstehend definiertes organisches Lösungsmittel, vorzugsweise eine wässrige Lösung einer Base, bevorzugter eine wässrige Lösung umfassend eine wie nachstehend definierte Base und Wasser,
und/oder
dass das Polyurethanpulver, vorzugsweise das schneeartige flockige Pulver, mit dem Dispergiermedium in einem Gewichtsverhältnis von 1:5 bis 1:40, bevorzugter von 1:8 bis 1:30 und sogar bevorzugter von 1:10 bis 1:25, gemischt wird,
und/oder
dass der Polyurethangehalt in der Dispersion nach Schritt b. und/oder der für Schritt c. verwendeten Dispersion in einem Bereich von 5 bis 18 und bevorzugter 8 bis 15 Gew.% liegt,
und/oder
die Partikelgröße der Polyurethanpartikel, gemessen durch ein Laserbeugungsanalysesystem wie in der Beschreibung beschrieben, in der Dispersion nach Schritt b. und/oder der für Schritt c. verwendeten Dispersion in einem Bereich von 10 bis 2000 µm, vorzugsweise 50 bis 1500 µm und bevorzugter 100 bis 1000 µm liegt.

6. Verfahren nach einem der Ansprüche 1 bis 5,
**dadurch gekennzeichnet, dass** Schritt b oder b2. in dem Solvolysereaktor durchführt wird und die gesamte Menge des Polyurethans vor Beginn der Solvolysereaktion dispergiert wird.

7. Verfahren nach einem der Ansprüche 1 bis 6,
**dadurch gekennzeichnet, dass** Schritt c. als eine Hydrolyse durchgeführt wird, wobei vorzugsweise eine Polyurethandispersion mit Wasser in Gegenwart einer Base und als Katalysator quaternärem Ammoniumsalz in Kontakt gebracht wird, um einen aktiven Wasserstoff enthaltenden Polyether, vorzugsweise Polyetherpolyol, und ein organisches Polyamin zu erhalten.

8. Verfahren nach Anspruch 7,
**dadurch gekennzeichnet, dass** die Hydrolyse bei Schritt c. durchgeführt wird, indem die bei Schritt b. erhaltene Polyurethandispersion mit Wasser in Gegenwart einer Base-Katalysator-Kombination (I), (II) oder (III) in Kontakt gebracht wird, wobei
die Base-Katalysator-Kombination (I) eine Base umfasst, die ein Alkalimetallkation und/oder ein Ammoniumkation umfasst und einen pKb-Wert bei 25 °C von 1 bis 10 aufweist, und einen Katalysator ausgewählt aus der Gruppe bestehend aus quaternären Ammoniumsalzen, die ein Ammoniumkation mit 6 bis 30 Kohlenstoffatomen enthalten, und organischen Sulfonaten, die wenigstens 7 Kohlenstoffatome enthalten,
oder
die Base-Katalysator-Kombination (II) eine starke anorganische Base mit einem pKb-Wert bei 25 °C von < 1 und als Katalysator ein quaternäres Ammoniumsalz mit einem Ammoniumkation mit 6 bis 14 Kohlenstoffatomen, vorzugsweise 6 bis 12 Kohlenstoffatomen, wenn das Ammoniumkation einen Benzylrest umfasst, umfasst,
oder
die Base-Katalysator-Kombination (III) eine starke anorganische Base mit einem pKb-Wert bei 25 °C von < 1 und als Katalysator ein quaternäres Ammoniumsalz mit einem Ammoniumkation mit 15 bis 30 Kohlenstoffatomen, vorzugsweise 15 bis 28, bevorzugter 15 bis 24, noch bevorzugter 16 bis 22 und höchst bevorzugt 16 bis 20, umfasst.

9. Verfahren nach Anspruch 8,
**dadurch gekennzeichnet, dass** die Alkalimetallkationumfassende Base in der Base-Katalysator-Kombination (I) ausgewählt ist aus der Gruppe bestehend aus Alkalimetallphosphaten, Alkalimetallhydrogenphosphaten, Alkalimetallcarbonaten, Alkalimetallsilicaten, Alkalimetallhydrogencarbonaten, Alkalimetallacetaten, Alkalimetallsulfiten, Ammoniumhydroxid und Gemischen davon.

10. Verfahren nach Anspruch 9, wobei die Alkalimetalle ausgewählt sind aus der Gruppe bestehend aus Na, K und Li und Gemischen davon, höchst bevorzugt Na und K und Gemischen davon.

11. Verfahren nach Anspruch 8,
**dadurch gekennzeichnet, dass** die starke Base in der Base-Katalysator-Kombination (II) oder (III) ausgewählt ist aus der Gruppe bestehend aus Alkalimetallhydroxiden, Alkalimetalloxiden, Erdalkalimetallhydroxiden, Erdalkalimetalloxiden und Gemischen davon.

12. Verfahren nach Anspruch 11, wobei die Alkalimetalle ausgewählt sind aus der Gruppe bestehend aus Na, K und Li und Gemischen davon, höchst bevorzugt Na und K und Gemischen davon, und/oder die Erdalkalimetalle ausgewählt sind aus der Gruppe bestehend aus Be, Mg, Ca, Sr, Ba und Gemischen davon, vorzugsweise Mg und Ca und Gemischen davon.

13. Verfahren nach einem der Ansprüche 7 bis 12, wobei der Katalysator ein quaternäres Ammoniumsalz mit der allgemeinen Struktur R₁ R₂ R₃ R₄ NX ist, wobei R₁, R₂, R₃ und R₄ gleich oder verschieden sind und Hydrocarbylgruppen ausgewählt aus Alkyl, Aryl und Arylalkyl sind und X ausgewählt ist aus der Gruppe bestehend aus Halogenid, vorzugsweise Chlorid und/oder Bromid, Hydrogensulfat, Alkylsulfat, vorzugsweise Methylsulfat und Ethylsulfat, Carbonat, Hydrogencarbonat, Carboxylat, vorzugsweise Acetat, und Hydroxid.

14. Verfahren nach Anspruch 13, wobei
für die Base-Katalysator-Kombination (I) und (III) der Katalysator ein quaternäres Ammoniumsalz mit der allgemeinen Struktur R₁ R₂ R₃ R₄ NX ist, wobei
- R₁ und R₂ gleich oder verschieden sind und Alkylgruppen mit 1 bis 12, vorzugsweise 1 bis 10, bevorzugter 1 bis 7, noch bevorzugter 1 bis 6, besonders bevorzugt 1 bis 5 und höchst bevorzugt 1 bis 4 Kohlenstoffatomen sind, wobei die Alkylgruppen linear, verzweigt, cyclisch, gesättigt oder ungesättigt sein können, wobei lineare gesättigte Alkylgruppen höchst bevorzugt sind,
- R₃ ausgewählt ist aus der Gruppe bestehend aus Alkylgruppen mit 1 bis 12, vorzugsweise 1 bis 10, bevorzugter 1 bis 7, noch bevorzugter 1 bis 6, besonders bevorzugter 1 bis 5 und höchst bevorzugt 1 bis 4 Kohlenstoffatomen, Arylgruppen mit 6 bis 14, vorzugsweise 6 bis 12 und höchst bevorzugt 6 bis 10 Kohlenstoffatomen und Aralkylgruppen mit 7 bis 14, vorzugsweise 7 bis 12 und höchst bevorzugt 7 bis 10 Kohlenstoffatomen, wobei die Alkylgruppen linear, verzweigt, cyclisch, gesättigt oder ungesättigt, höchst bevorzugt linear, sein können,
und
- R₄ ausgewählt ist aus der Gruppe bestehend aus Alkylgruppen mit 3 bis 12, vorzugsweise 3 bis 10, bevorzugter 3 bis 7, höchst bevorzugt 4 bis 6 Kohlenstoffatomen, Arylgruppen mit 6 bis 14, vorzugsweise 6 bis 12 und höchst bevorzugt 6 bis 10 Kohlenstoffatomen und Aralkylgruppen mit 7 bis 14, vorzugsweise 7 bis 12 und höchst bevorzugt 7 bis 10 Kohlenstoffatomen, wobei die Alkylgruppen linear, verzweigt, cyclisch, gesättigt oder ungesättigt, höchst bevorzugt linear und gesättigt, sein können, und
- X ausgewählt ist aus der Gruppe bestehend aus Halogenid, vorzugsweise Chlorid und/oder Bromid, Hydrogensulfat, Alkylsulfat, vorzugsweise Methylsulfat und Ethylsulfat, Carbonat, Hydrogencarbonat, Acetat und Hydroxid.
und/oder
für die Base-Katalysator-Kombination (II) der Katalysator ein quaternäres Ammoniumsalz mit der allgemeinen Struktur R₁ R₂ R₃ R₄ NX ist, wobei
- R₁ bis R₃ gleich oder verschieden sind und Alkylgruppen mit 1 bis 6, vorzugsweise 1 bis 5, bevorzugter 1 bis 4, noch bevorzugter 1 bis 3, bevorzugter 1 oder 2 und höchst bevorzugt 1 Kohlenstoffatomen sind, wobei die Alkylgruppen linear, verzweigt, cyclisch, gesättigt oder ungesättigt sein können, wobei lineare gesättigte Alkylgruppen höchst bevorzugt sind,
- R₄ ausgewählt ist aus der Gruppe bestehend aus Alkylgruppen mit 3 bis 11, vorzugsweise 3 bis 10, bevorzugter 3 bis 8, höchst bevorzugt 4 bis 6 Kohlenstoffatomen, Arylgruppen mit 6 bis 11, vorzugsweise 6 bis 10 und höchst bevorzugt 6 bis 8 Kohlenstoffatomen und Aralkylgruppen mit 7 bis 11, vorzugsweise 7 bis 10 und höchst bevorzugt 7 bis 9 Kohlenstoffatomen, wobei die Alkylgruppen linear, verzweigt, cyclisch, gesättigt oder ungesättigt sein können, wobei lineare gesättigte Alkylgruppen höchst bevorzugt sind, und
- X ausgewählt ist aus der Gruppe bestehend aus Halogenid, vorzugsweise Chlorid und/oder Bromid, Hydrogensulfat, Alkylsulfat, vorzugsweise Methylsulfat und Ethylsulfat, Carbonat, Hydrogencarbonat, Acetat und Hydroxid.

15. Verfahren nach Anspruch 13 oder 14, wobei
für die Base-Katalysator-Kombination (I)
R₁ bis R₄ so ausgewählt sind, dass die Summe der Kohlenstoffatome in dem quaternären Ammoniumkation 6 bis 14, vorzugsweise 7 bis 14, bevorzugter 8 bis 13, beträgt
oder
R₁ bis R₄ so ausgewählt sind, dass die Summe der Kohlenstoffatome in dem quaternären Ammoniumkation 15 bis 30, vorzugsweise 15 bis 28, bevorzugter 15 bis 24, noch bevorzugter 16 bis 22 und höchst bevorzugt 16 bis 20 beträgt.

16. Verfahren nach Anspruch 13 oder 14, wobei
für die Base-Katalysator-Kombination (II)
R₄ von einem Benzylrest verschieden ist und R₁ bis R₄ so ausgewählt sind, dass die Summe der Kohlenstoffatome in dem quaternären Ammoniumkation 6 bis 14, vorzugsweise 7 bis 14, bevorzugter 8 bis 13, beträgt
oder
R₄ ein Benzylrest ist, R₁ bis R₃ so ausgewählr sind, dass die Summe der Kohlenstoffatome in dem quaternären Ammoniumkation 6 bis 12, vorzugsweise 7 bis 12, bevorzugter 8 bis 11, beträgt.

17. Verfahren nach einem der Ansprüche 7 bis 16, wobei wenigstens 0,5 Gew.-% des quaternären Ammoniumsalzes als Phasentransferkatalysatoren, bezogen auf das Gewicht des Polyurethans, verwendet werden, bevorzugter 0,5 bis 15 Gew.-%, noch bevorzugter 1 bis 10 Gew.-%, insbesondere bevorzugt mehr 1 bis 8 Gew.-%, besonders bevorzugt 1 bis 7 und höchst bevorzugt 2 bis 6 Gew.-%.

18. Verfahren nach einem der Ansprüche 1 bis 17, umfassend einen zusätzlichen Schritt des Trennens und Gewinnens der Reaktionsprodukte der Solvolyse, vorzugsweise von organischem Polyamin und/oder einem aktiven Wasserstoff enthaltenden Polyether, vorzugsweise eines Polyetherpolyols.

19. Verfahren nach einem der Ansprüche 1 bis 18, wobei die Solvolyse bei Schritt c. bei einer Temperatur von 80 °C bis 200 °C, vorzugsweise 90 °C bis 180 °C, bevorzugter 95 °C bis 170 °C und höchst bevorzugt 100 °C bis 160 °C durchgeführt wird,
und/oder
für 1 Minute bis 14 Stunden, vorzugsweise 1 Minute bis 12 Stunden, bevorzugter 10 Minuten bis 10 Stunden, noch bevorzugter 10 Minuten bis 15 Stunden, insbesondere bevorzugt 20 Minuten bis 2 Stunden, besonders bevorzugt 20 Minuten bis 1 Stunde und höchst bevorzugt 20 Minuten bis 50 Minuten.

20. Verfahren nach einem der Ansprüche 1 bis 19, wobei die Solvolyse bei Schritt c. bei Atmosphärendruck oder unter erhöhtem Druck, insbesondere unter einem Druck von 100 bis 1500 kPa (1 bis 15 bara), vorzugsweise 100 bis 1000 kPa (1 bis 10 bara), bevorzugter 100 bis 500 kPa (1 bis 5 bara), durchgeführt wird.

## Revendications

1. Procédé de solvolyse d'un polyuréthane, de préférence un polyuréthane produit par réaction d'un polyéther contenant de l'hydrogène actif et d'un polyisocyanate organique, comprenant les étapes :
a. fourniture du polyuréthane, de préférence une mousse de polyuréthane,
b. préparation d'une dispersion à partir du polyuréthane,
c. solvolyse de la dispersion de polyuréthane, de préférence la solvolyse étant effectuée sous forme d'alcoolyse, d'aminolyse, d'ammonolyse, d'hydrolyse ou d'acidolyse,
**caractérisé en ce que**
le polyuréthane devant être dispersé a une taille moyenne des particules, mesurée par analyseur par diffraction laser comme décrit dans la description, de 0,1 à 12 mm et
la teneur du polyuréthane dans la dispersion après l'étape b. et/ou la dispersion utilisée pour l'étape c. est dans une plage allant de 4 à 20 pour cent en poids.

2. Procédé selon la revendication 1,
**caractérisé en ce que** l'étape b. comprend les étapes
b1. hachage, pulvérisation, broyage, mouture, découpage ou autre fragmentation du polyuréthane fourni à l'étape a., de préférence avec un moulin de coupe ou un dispositif de fragmentation choisi dans le groupe constitué par un moulin à cylindres, un concasseur, une déchiqueteuse et une extrudeuse pour obtenir une poudre de polyuréthane, de préférence une poudre pelucheuse ressemblant à de la neige,
b2. production d'une dispersion à partir de la poudre de polyuréthane obtenue à l'étape b1., de préférence la poudre pelucheuse ressemblant à de la neige, obtenue à l'étape b1., de préférence par l'utilisation de dispositifs choisis dans le groupe constitué par les moulins à colloïdes, plus préférablement les moulins coniques, les systèmes à rotor-stator à un seul étage ou à plusieurs étages présentant différentes géométries ou un disque de dissolveur ou une roue à ailettes en dents de scie fonctionnant rapidement dans une cuve agitée.

3. Procédé selon la revendication 1 ou 2,
**caractérisé en ce que** la poudre de polyuréthane devant être dispersée a une taille moyenne des particules, mesurée par analyseur par diffraction laser comme décrit dans la description, de 0,2 à 4 mm, plus préférablement de 0,5 à 2 mm et/ou a une masse volumique apparente supérieure à 30 kg/m³, plus préférablement supérieure à 60 kg/m³ et encore plus préférablement allant de 90 kg/m³ à 200 kg/m³.

4. Procédé selon la revendication 2 ou 3,
**caractérisé en ce que**
l'étape b1. est effectuée dans une plage de température comprise entre la température ambiante et 120 °C, de préférence entre la température ambiante et 100 °C, plus préférablement entre la température ambiante et 80 °C et le plus préférablement entre la température ambiante et 60 °C et/ou
l'étape b2. est effectuée à une température de 10 à 90 °C, de préférence de 15 à 80 °C et plus préférablement de 20 à 60 °C.

5. Procédé selon l'une quelconque des revendications 1 à 4,
**caractérisé en ce que**
un liquide ou un mélange de liquide et d'autres composants, qui est ou sont utilisés en tant que réactif et/ou solvant à l'étape de solvolyse c. ou un produit de réaction de solvolyse de l'étape c., tel qu'un polyol de recyclage, est utilisé en tant que milieu de dispersion à l'étape b., respectivement b2, plus préférablement le liquide ou mélange de liquide et d'autres composants est choisi dans le groupe constitué par
- l'eau,
- les solvants organiques, de préférence choisis dans le groupe constitué par un polyol, un polyol de recyclage, un glycol, la glycérine, la toluènediamine et les mélanges de ceux-ci,
- un mélange comprenant une base et de l'eau et/ou une base et un solvant organique tel que défini ci-dessus, de préférence une solution aqueuse d'une base, plus préférablement une solution aqueuse comprenant une base telle que définie plus précisément ci-dessous et de l'eau,
et/ou
**en ce que** la poudre de polyuréthane, de préférence la poudre pelucheuse ressemblant à de la neige, est mélangée avec le milieu de dispersion en un rapport pondéral allant de 1:5 à 1:40, plus préférablement de 1:8 à 1:30 et encore plus préférablement de 1:10 à 1:25,
et/ou
**en ce que** la teneur du polyuréthane dans la dispersion après l'étape **b.** et/ou la dispersion utilisée pour l'étape **c.** est dans une plage allant de 5 à 18 et plus préférablement de 8 à 15 pour cent en poids,
et/ou
la taille de particule des particules de polyuréthane, mesurée par analyseur par diffraction laser comme décrit dans la description, dans la dispersion après l'étape **b.** et/ou la dispersion utilisée pour l'étape **c.** est dans une plage de 10 à 2000 µm, de préférence de 50 à 1500 µm et plus préférablement de 100 à 1000 µm.

6. Procédé selon l'une quelconque des revendications 1 **à** 5,
**caractérisé en ce que** l'étape b ou **b2.** est effectuée dans le réacteur de solvolyse et la totalité de la quantité du polyuréthane est dispersée avant le démarrage de la réaction de solvolyse.

7. Procédé selon l'une quelconque des revendications 1 **à** 6,
**caractérisé en ce que** l'étape **c.** est effectuée sous forme **d'une** hydrolyse, de préférence une dispersion de polyuréthane est mise en contact avec de l'eau en présence d'une base et d'un sel d'ammonium quaternaire en tant que catalyseur pour procurer un polyéther contenant de l'hydrogène actif, de préférence un polyol de polyéther, et une polyamine organique.

8. Procédé selon la revendication 7,
**caractérisé en ce que** l'hydrolyse à l'étape c. est effectuée par mise en contact de la dispersion de polyuréthane obtenue à l'étape b. avec de l'eau en présence d'une combinaison base-catalyseur (I), (II) ou (III),
la combinaison base-catalyseur (I) comprenant une base comprenant un cation de métal alcalin et/ou un cation ammonium et ayant une valeur de pKb à 25 °C allant de 1 à 10 et un catalyseur choisi dans le groupe constitué par les sels d'ammonium quaternaire contenant un cation ammonium contenant 6 à 30 atomes de carbone et les sulfonates organiques contenant au moins 7 atomes de carbone,
ou
la combinaison base-catalyseur (II) comprenant une base inorganique forte ayant une valeur de pKb à 25 °C < 1 et en tant que catalyseur un sel d'ammonium quaternaire contenant un cation ammonium contenant 6 à 14 atomes de carbone, de préférence 6 à 12 atomes de carbone si le cation ammonium comprend un résidu benzyle,
ou
la combinaison base-catalyseur (III) comprenant une base inorganique forte ayant une valeur de pKb à 25 °C < 1 et en tant que catalyseur un sel d'ammonium quaternaire contenant un cation ammonium contenant 15 à 30 atomes de carbone, de préférence 15 à 28, plus préférablement 15 à 24, encore plus préférablement 16 à 22 et le plus préférablement 16 à 20.

9. Procédé selon la revendication 8,
**caractérisé en ce que** la base comprenant un cation de métal alcalin dans la combinaison base-catalyseur (I) est choisie dans le groupe constitué par les phosphates de métaux alcalins, les hydrogénophosphates de métaux alcalins, les carbonates de métaux alcalins, les silicates de métaux alcalins, les hydrogénocarbonates de métaux alcalins, les acétates de métaux alcalins, les sulfites de métaux alcalins, l'hydroxyde d'ammonium et les mélanges de ceux-ci.

10. Procédé selon la revendication 9 dans lequel les métaux alcalins sont choisis dans le groupe constitué par Na, K et Li et les mélanges de ceux-ci, le plus préférablement Na et K et les mélanges de ceux-ci.

11. Procédé selon la revendication 8,
**caractérisé en ce que** la base forte dans la combinaison base-catalyseur (II) ou (III) est choisie dans le groupe constitué par les hydroxydes de métaux alcalins, les oxydes de métaux alcalins, les hydroxydes de métaux alcalino-terreux, les oxydes de métaux alcalino-terreux et les mélanges de ceux-ci.

12. Procédé selon la revendication 11 dans lequel les métaux alcalins sont choisis dans le groupe constitué par Na, K et Li et les mélanges de ceux-ci, le plus préférablement Na et K et les mélanges de ceux-ci et/ou les métaux alcalino-terreux sont choisis dans le groupe constitué par Be, Mg, Ca, Sr et Ba et les mélanges de ceux-ci, de préférence Mg et Ca et les mélanges de ceux-ci.

13. Procédé selon l'une quelconque des revendications 7 à 12 dans lequel le catalyseur est un sel d'ammonium quaternaire ayant la structure générale R₁R₂R₃R₄NX où R₁, R₂, R₃ et R₄ sont identiques ou différents et sont des groupes hydrocarbyle choisis parmi des groupes alkyle, aryle et arylalkyle et X est choisi dans le groupe constitué par les ions halogénure, de préférence chlorure et/ou bromure, hydrogénosulfate, alkylsulfate, de préférence méthylsulfate et éthylsulfate, carbonate, hydrogénocarbonate, carboxylate, de préférence acétate, ou hydroxyde.

14. Procédé selon la revendication 13, dans lequel
pour la combinaison base-catalyseur (I) et (III) le catalyseur est un sel d'ammonium quaternaire ayant la structure générale R₁R₂R₃R₄NX où
- R₁ et R₂ sont identiques ou différents et sont des groupes alkyle de 1 à 12, de préférence 1 à 10, plus préférablement 1 à 7, encore plus préférablement 1 à 6, particulièrement préférablement 1 à 5 et le plus préférablement 1 à 4 atomes de carbone, les groupes alkyle pouvant être linéaires, ramifiés, cycliques, saturés ou insaturés, le plus préférablement étant des groupes alkyle linéaires saturés,
- R₃ est choisi dans le groupe constitué par les groupes alkyle de 1 à 12, de préférence 1 à 10, plus préférablement 1 à 7, encore plus préférablement 1 à 6, particulièrement préférablement 1 à 5 et le plus préférablement 1 à 4 atomes de carbone, les groupes aryle de 6 à 14, de préférence 6 à 12 et le plus préférablement 6 à 10 atomes de carbone et les groupes aralkyle de 7 à 14, de préférence 7 à 12 et le plus préférablement 7 à 10 atomes de carbone, les groupes alkyle pouvant être linéaires, ramifiés, cycliques, saturés ou insaturés, le plus préférablement linéaires, et
- R₄ est choisi dans le groupe constitué par les groupes alkyle de 3 à 12, de préférence 3 à 10, plus préférablement 3 à **7,** le plus préférablement 4 à 6 atomes de carbone, les groupes aryle de 6 à 14, de préférence 6 à 12 et le plus préférablement 6 à 10 atomes de carbone et les groupes aralkyle de 7 à 14, de préférence 7 à 12 et le plus préférablement 7 à 10 atomes de carbone, les groupes alkyle pouvant être linéaires, ramifiés, cycliques, saturés ou insaturés, le plus préférablement linéaires et saturés, et
- X est choisi dans le groupe constitué par les ions halogénure, de préférence chlorure et/ou bromure, hydrogénosulfate, alkylsulfate, de préférence méthylsulfate et éthylsulfate, carbonate, hydrogénocarbonate, acétate ou hydroxyde,
et/ou
pour la combinaison base-catalyseur (II) le catalyseur est un sel d'ammonium quaternaire ayant la structure générale R₁R₂R₃R₄NX où
- R₁ à R₃ sont identiques ou différents et sont des groupes alkyle de 1 à 6, de préférence 1 à 5, plus préférablement 1 à 4, encore plus préférablement 1 à 3, particulièrement préférablement 1 ou 2 atomes de carbone et le plus préférablement 1 atome de carbone, les groupes alkyle pouvant être linéaires, ramifiés, cycliques, saturés ou insaturés, le plus préférablement étant des groupes alkyle linéaires saturés,
- R₄ est choisi dans le groupe constitué par les groupes alkyle de 3 à 11, de préférence 3 à 10, plus préférablement 3 à 8, le plus préférablement 4 à 6 atomes de carbone, les groupes aryle de 6 à 11, de préférence 6 à 10 et le plus préférablement 6 à 8 atomes de carbone et les groupes aralkyle de 7 à 11, de préférence 7 à 10 et le plus préférablement 7 à 9 atomes de carbone, les groupes alkyle pouvant être linéaires, ramifiés, cycliques, saturés ou insaturés, le plus préférablement étant des groupes alkyle linéaires saturés, et
- X est choisi dans le groupe constitué par les ions halogénure, de préférence chlorure et/ou bromure, hydrogénosulfate, alkylsulfate, de préférence méthylsulfate et éthylsulfate, carbonate, hydrogénocarbonate, acétate ou hydroxyde,

15. Procédé selon la revendication 13 ou 14, dans lequel
pour la combinaison base-catalyseur (I)
R₁ à R₄ sont choisis de façon telle que le nombre total d'atomes de carbone dans le cation ammonium quaternaire est de 6 à 14, de préférence 7 à 14, plus préférablement 8 à 13
ou
R₁ à R₄ sont choisis de façon telle que le nombre total d'atomes de carbone dans le cation ammonium quaternaire est de 15 à 30, de préférence 15 à 28, plus préférablement 15 à 24, encore plus préférablement 16 à 22 et le plus préférablement 16 à 20.

16. Procédé selon la revendication 13 ou 14, dans lequel
pour la combinaison base-catalyseur (II)
R₄ est différent d'un résidu benzyle et R₁ à R₄ sont choisis de façon telle que le nombre total d'atomes de carbone dans le cation ammonium quaternaire est de 6 à 14, de préférence 7 à 14, plus préférablement 8 à 13
ou
R₄ est un résidu benzyle, R₁ à R₃ sont choisis de façon telle que le nombre total d'atomes de carbone dans le cation ammonium quaternaire est de 6 à 12, de préférence 7 à 12, plus préférablement 8 à 11.

17. Procédé selon l'une quelconque des revendications 7 à 16 dans lequel au moins 0,5 pour cent en poids du sel d'ammonium quaternaire est utilisé en tant que catalyseur de transfert de phase, par rapport au poids du polyuréthane, plus préférablement 0,5 à 15 pour cent en poids, encore plus préférablement 1 à 10 pour cent en poids, de préférence en particulier 1 à 8 pour cent en poids, particulièrement préférablement 1 à 7 et le plus préférablement 2 à 6 pour cent en poids.

18. Procédé selon l'une quelconque des revendications 1 à 17 comprenant une étape supplémentaire de séparation et récupération des produits de réaction de la solvolyse, de préférence de polyamine organique et/ou d'un polyéther contenant de l'hydrogène actif, de préférence un polyol de polyéther.

19. Procédé selon l'une quelconque des revendications 1 à 18, dans lequel la solvolyse à l'étape **c.** est effectuée à une température allant de 80 °C à 200 °C, de préférence de 90 °C à 180 °C, plus préférablement de 95 °C à 170 °C et le plus préférablement de 100 °C à 160 °C
et/ou
pendant 1 minute à 14 heures, de préférence 1 minute à 12 heures, plus préférablement 10 minutes à 10 heures, encore plus préférablement 10 minutes à 15 heures, de préférence en particulier 20 minutes à 2 heures, particulièrement préférablement 20 minutes à 1 heure et le plus préférablement 20 minutes à 50 minutes.

20. Procédé selon l'une quelconque des revendications 1 à 19, dans lequel la solvolyse à l'étape **c.** est effectuée à pression atmosphérique ou sous une pression élevée, en particulier sous une pression allant de 100 à 1500 kPa (1 à 15 bar abs.), de préférence de 100 à 1000 kPa (1 à 10 bar abs.), plus préférablement de 100 à 500 kPa (1 à 5 bar abs.).
